# EUROPEAN PATENT APPLICATION

(11) **EP 4 615 109 A1**
(43) Date of publication of application: **10.09.2025**
(21) Application number: 23884822.0
(22) Date of filing: 30.10.2023
(51) Int. Cl.: H04W 72/11

(54) **CONFLICT PROCESSING METHOD AND APPARATUS, TERMINAL, AND NETWORK DEVICE**

(30) Priority: 04.11.2022 CN 202211379748
(71) Applicant: Datang Mobile Communications Equipment Co., Ltd., Beijing 100085 (CN)
(72) Inventor: SI, Qianqian, Beijing 100085 (CN); GAO, Xuejuan, Beijing 100085 (CN); ZHAO, Yue, Beijing 100085 (CN); XING, Yanping, Beijing 100085 (CN)
(74) Representative: Maiwald GmbH
(86) International application number: PCT/CN2023/127647
(87) International publication number: WO 2024/093891

(57) **Abstract**

This disclosure provides a conflict processing method, apparatus, terminal, and network device, relating to the field of communication technologies. The method includes: performing conflict processing on a transmission over Orthogonal Frequency Division Multiplexing (OFDM) symbols of Sub-Band Full Duplex (SBFD), wherein the conflict processing comprises at least one of the following: performing first conflict processing first; or performing second conflict processing first; wherein the first conflict refers to a conflict between channels or signals in the same transmission direction, and the second conflict refers to a conflict between uplink channels or signals and downlink channels or signals.

## Description

### CROSS-REFERENCE TO RELATED APPLICATIONS

This application claims priority to Chinese Patent Application No. 202211379748.8, filed on November 4, 2022, in China, titled "A Conflict Handling Method, Apparatus, Terminal, and Network Device", the entirety of which is incorporated herein by reference.

### TECHNICAL FIELD

The present disclosure relates to the field of communication technologies, and in particular, to a conflict handling method, apparatus, terminal, and network device.

### BACKGROUND

In the 5th Generation Mobile Communication Technology (5G) New Radio (NR) system, consideration is given to implementing SubBand Full Duplex (SBFD), wherein uplink subbands and downlink subbands may simultaneously exist within a Time Division Duplex (TDD) band, carrier, or Bandwidth Part (BWP). As a result, in SBFD systems, a terminal may encounter conflicts between uplink transmission and downlink transmission. However, current communication systems do not provide a specific solution to address such conflicts.

### SUMMARY

The present disclosure provides a conflict processing method, device, terminal, and network device, for resolving the problem that there is currently no solution for the transmission conflict between uplink transmission and downlink transmission within the same time period in an SBFD system.

An embodiment of the present disclosure provides a conflict processing method, applied to a terminal, comprising:
performing conflict processing on transmission over OFDM symbols of SubBand Full Duplex (SBFD), wherein the performing the conflict processing comprises at least one of the following:
performing first-conflict processing first; or
performing second-conflict processing first;
where the first conflict refers to a conflict between channels or signals of the same transmission direction, and the second conflict refers to a conflict between an uplink channel or signal and a downlink channel or signal.

Optionally, the performing first-conflict processing first comprises: performing the first-conflict processing first and then performing the second-conflict processing;
and/or,
the performing second-conflict processing first comprises: performing the second-conflict processing first and then performing the first-conflict processing.

Optionally, the performing the first-conflict processing comprises at least one of the following:
for a plurality of channels in the same transmission direction, transmitting a first channel and multiplexing information carried on a second channel, which is other than the first channel, onto the first channel; wherein the first channel is at least one of the plurality of channels; or
for a plurality of channels in the same transmission direction, transmitting a target channel and multiplexing information carried on the plurality of channels onto the target channel; wherein the target channel is another channel in the same transmission direction as the plurality of channels; or
for a plurality of channels or signals in the same transmission direction, discarding a channel or signal determined according to a predefined rule; or
for a plurality of channels or signals in the same transmission direction, transmitting a first-priority channel or signal and discarding a second-priority channel or signal; wherein the first priority is higher than the second priority.

Optionally, the performing the second-conflict processing comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rule comprises at least one of the following:
in a case where a conflict exists among a plurality of semi-statically configured channels or signals with different transmission directions over an OFDM symbol of SBFD, transmitting a channel or signal in a predefined transmission direction; wherein the predefined transmission direction is uplink or downlink;
in a case where the transmission direction of a semi-statically configured channel or signal is different from that of a dynamically scheduled channel or signal over an OFDM symbol of SBFD, transmitting the dynamically scheduled channel or signal.

Optionally, in a case where a third conflict exists between a transmission direction of a physical channel or signal and a transmission direction of a physical resource, the method further comprises at least one of the following:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, after performing the second-conflict processing before performing the first-conflict processing, the method further comprises:
performing the second-conflict processing again.

Optionally, the performing the second-conflict processing again comprises:
in a case where a transmission conflict still exists over an OFDM symbol of the SBFD after performing the second-conflict processing and then the first-conflict processing, performing the second-conflict processing again.

Optionally, in a case where a third conflict exists between a transmission direction of a physical channel or signal and a transmission direction of a physical resource, the method further comprises at least one of the following:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, the transmission direction of the physical resource is a transmission direction of a physical resource unit determined based on an indication from a network device;
the third conflict comprises: a transmission direction of at least one physical resource unit occupied by the physical channel or signal being different from a transmission direction of the physical channel or signal.

Optionally, the performing the third-conflict processing comprises:
in a case where the third conflict exists, discarding the physical channel or signal.

An embodiment of the present disclosure provides a conflict processing method, which is applied to a network device, comprising:
performing conflict processing on transmission over OFDM symbols of SubBand Full Duplex (SBFD), wherein the performing the conflict processing comprises at least one of the following:
performing first-conflict processing first; or
performing second-conflict processing first;
wherein the first conflict refers to a conflict between channels or signals of the same transmission direction, and the second conflict refers to a conflict between an uplink channel or signal and a downlink channel or signal.

Optionally, the performing first-conflict processing first comprises: performing the first-conflict processing first and then performing the second-conflict processing;
and/or,
the performing second-conflict processing first comprises: performing the second-conflict processing first and then performing the first-conflict processing.

Optionally, the performing the first-conflict processing comprises at least one of the following:
for a plurality of channels in the same transmission direction, transmitting a first channel and multiplexing information carried on a second channel, which is other than the first channel, onto the first channel; wherein the first channel is at least one of the plurality of channels; or
for a plurality of channels in the same transmission direction, transmitting a target channel and multiplexing information carried on the plurality of channels onto the target channel; wherein the target channel is another channel in the same transmission direction as the plurality of channels; or
for a plurality of channels or signals in the same transmission direction, discarding a channel or signal determined according to a predefined rule; or
for a plurality of channels or signals in the same transmission direction, transmitting a first-priority channel or signal and discarding a second-priority channel or signal; wherein the first priority is higher than the second priority.

Optionally, the performing the second-conflict processing comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rule comprises at least one of the following:
semi-statically configured channels with different transmission directions are not allowed to be transmitted over the OFDM symbols of SBFD; or
different transmission directions of dynamically scheduled channels are not allowed to be transmitted over OFDM symbols of the SBFD; or
in a case where a conflict exists between multiple semi-statically configured channels or signals with different transmission directions over OFDM symbols of the SBFD, transmitting a channel or signal in a predefined transmission direction, wherein the predefined transmission direction is uplink or downlink;
in a case where a transmission direction of a semi-statically configured channel or signal is different from a transmission direction of a dynamically scheduled channel or signal over OFDM symbols of the SBFD, transmitting the dynamically scheduled channel or signal.

Optionally, in a case where a third conflict exists between a transmission direction of a physical channel or signal and a transmission direction of a physical resource, the method further comprises at least one of the following:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, after performing the second-conflict processing before the first-conflict processing, the method further comprises:
performing the second-conflict processing again.

Optionally, the performing the second-conflict processing again comprises:
in a case where a transmission conflict still exists over OFDM symbols of the SBFD after performing the second-conflict processing and then the first-conflict processing, performing the second-conflict processing again.

Optionally, in a case where a third conflict exists between a transmission direction of a physical channel or signal and a transmission direction of a physical resource, the method further comprises at least one of the following:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, the transmission direction of the physical resource is a transmission direction of a physical resource unit determined based on an indication from a network device;
the third conflict comprises: a transmission direction of at least one physical resource unit occupied by the physical channel or signal being different from a transmission direction of the physical channel or signal.

Optionally, the performing the third-conflict processing comprises:
in a case where the third conflict exists, discarding the physical channel or signal.

An embodiment of the present disclosure provides a conflict processing apparatus applied to a terminal, comprising a memory, a transceiver, and a processor;
wherein the memory is configured to store a computer program; the transceiver is configured to transmit and receive data under the control of the processor; the processor is configured to read the computer program from the memory and perform the following operations:
performing conflict processing on transmission over OFDM symbols of SubBand Full Duplex (SBFD), wherein the performing the conflict processing comprises at least one of the following:
performing first-conflict processing first; or
performing second-conflict processing first;
wherein the first conflict refers to a conflict between channels or signals of the same transmission direction, and the second conflict refers to a conflict between an uplink channel or signal and a downlink channel or signal.

Optionally, the performing first-conflict processing first comprises: performing the first-conflict processing first and then performing the second-conflict processing;
and/or
the performing second-conflict processing first comprises: performing the second-conflict processing first and then performing the first-conflict processing.

Optionally, the performing the first-conflict processing comprises at least one of the following:
for a plurality of channels in the same transmission direction, transmitting a first channel and multiplexing information carried on a second channel, which is other than the first channel, onto the first channel, wherein the first channel is at least one of the plurality of channels; or
for a plurality of channels in the same transmission direction, transmitting a target channel and multiplexing information carried on the plurality of channels onto the target channel, wherein the target channel is another channel in the same transmission direction as the plurality of channels; or
for a plurality of channels or signals in the same transmission direction, discarding a channel or signal determined according to a predefined rule; or
for a plurality of channels or signals in the same transmission direction, transmitting a first-priority channel or signal and discarding a second-priority channel or signal, wherein the first priority is higher than the second priority.

Optionally, the performing the second-conflict processing comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rule comprises at least one of the following:
in a case where a conflict exists between multiple semi-statically configured channels or signals with different transmission directions over OFDM symbols of the SBFD, transmitting a channel or signal in a predefined transmission direction, wherein the predefined transmission direction is uplink or downlink; or
in a case where a transmission direction of a semi-statically configured channel or signal is different from a transmission direction of a dynamically scheduled channel or signal over OFDM symbols of the SBFD, transmitting the dynamically scheduled channel or signal.

Optionally, in a case where a third conflict exists between a transmission direction of a physical channel or signal and a transmission direction of a physical resource, the processor is configured to read the computer program from the memory and perform at least one of the following operations:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, after performing the second-conflict processing before the first-conflict processing, the processor is configured to read the computer program from the memory and perform the following operation:
performing the second-conflict processing again.

Optionally, the processor is configured to read the computer program from the memory and perform the following operation:
in a case where a transmission conflict still exists over OFDM symbols of the SBFD after performing the second-conflict processing and then the first-conflict processing, performing the second-conflict processing again.

Optionally, in a case where a third conflict exists between a transmission direction of a physical channel or signal and a transmission direction of a physical resource, the processor is configured to read the computer program from the memory and perform at least one of the following operations:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, the transmission direction of the physical resource is a transmission direction of a physical resource unit determined based on an indication from a network device;
the third conflict comprises: a transmission direction of at least one physical resource unit occupied by the physical channel or signal being different from a transmission direction of the physical channel or signal.

Optionally, the performing the third-conflict processing comprises:
in a case where the third conflict exists, discarding the physical channel or signal.

An embodiment of the present disclosure provides a terminal, comprising:
a processing unit, configured to perform conflict processing on transmission over OFDM symbols of SubBand Full Duplex (SBFD), wherein the performing the conflict processing comprises at least one of the following:
performing first-conflict processing first; or
performing second-conflict processing first;
wherein the first conflict refers to a conflict between channels or signals of the same transmission direction, and the second conflict refers to a conflict between an uplink channel or signal and a downlink channel or signal.

An embodiment of the present disclosure provides a processor-readable storage medium, which stores a computer program for causing the processor to perform the steps of the conflict processing method on the terminal side as described above.

An embodiment of the present disclosure provides a conflict processing apparatus applied to a network device, comprising a memory, a transceiver, and a processor;
wherein the memory is configured to store a computer program; the transceiver is configured to transmit and receive data under the control of the processor; the processor is configured to read the computer program from the memory and perform the following operations:
performing conflict processing on transmission over OFDM symbols of SubBand Full Duplex (SBFD), wherein the performing the conflict processing comprises at least one of the following:
performing first-conflict processing first; or
performing second-conflict processing first.

The first conflict refers to a conflict between channels or signals of the same transmission direction, and the second conflict refers to a conflict between uplink channels or signals and downlink channels or signals.

Optionally, the performing the first-conflict processing first comprises: performing the first-conflict processing first and then performing the second-conflict processing;
and/or,
the performing the second-conflict processing first comprises: performing the second-conflict processing first and then performing the first-conflict processing.

Optionally, the performing the first-conflict processing comprises at least one of the following:
for multiple channels of the same transmission direction, transmitting a first channel and multiplexing information carried on second channels other than the first channel onto the first channel, wherein the first channel is at least one of the multiple channels; or
for multiple channels of the same transmission direction, transmitting a target channel and multiplexing information carried on the multiple channels onto the target channel, wherein the target channel is another channel of the same transmission direction as the multiple channels; or
for multiple channels or signals of the same transmission direction, discarding channels or signals determined based on a predefined rule;
for multiple channels or signals of the same transmission direction, transmitting channels or signals with a first priority and discarding channels or signals with a second priority, wherein the first priority is higher than the second priority.

Optionally, the performing the second-conflict processing comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rule comprises at least one of the following:
disallowing transmission of semi-statically configured channels of different transmission directions over OFDM symbols of the SBFD; or
disallowing transmission of dynamically scheduled channels of different transmission directions over OFDM symbols of the SBFD; or
in a case where a conflict exists between multiple semi-statically configured channels or signals of different transmission directions over OFDM symbols of the SBFD, transmitting a channel or signal in a predefined transmission direction, wherein the predefined transmission direction is uplink or downlink; or
in a case where a transmission direction of a semi-statically configured channel or signal differs from a transmission direction of a dynamically scheduled channel or signal over OFDM symbols of the SBFD, transmitting the dynamically scheduled channel or signal.

Optionally, in a case where a third conflict exists between a transmission direction of a physical channel or signal and a transmission direction of a physical resource, the processor is configured to read the computer program from the memory and perform at least one of the following operations:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, after performing the second-conflict processing before the first-conflict processing, the processor is configured to read the computer program from the memory and perform the following operation:
performing the second-conflict processing again.

Optionally, the processor is configured to read the computer program from the memory and perform the following operation:
in a case where a transmission conflict still exists over OFDM symbols of the SBFD after performing the second-conflict processing and then the first-conflict processing, performing the second-conflict processing again.

Optionally, in a case where a third conflict exists between a transmission direction of a physical channel or signal and a transmission direction of a physical resource, the processor is configured to read the computer program from the memory and perform at least one of the following operations:
performing the third-conflict processing after performing the first-conflict processing; or
performing the third-conflict processing before performing the first-conflict processing; or
performing the third-conflict processing after performing the second-conflict processing; or
performing the third-conflict processing before performing the second-conflict processing.

Optionally, the transmission direction of the physical resource refers to a transmission direction on a physical resource unit determined based on an indication of a network device;
the third conflict comprises: a transmission direction of at least one physical resource unit occupied by the physical channel or signal being different from the transmission direction of the physical channel or signal.

Optionally, the performing the third-conflict processing comprises:
in a case where the third conflict exists, discarding the physical channel or signal.

An embodiment of the present disclosure provides a network device, comprising:
a processing unit, configured to perform conflict processing on transmission over OFDM symbols of subband full duplex (SBFD), wherein the performing the conflict processing comprises at least one of the following:
performing the first-conflict processing first; or
performing the second-conflict processing first;
wherein the first conflict is a conflict between channels or signals of the same transmission direction, and the second conflict is a conflict between uplink channels or signals and downlink channels or signals.

An embodiment of the present disclosure provides a processor-readable storage medium, where the processor-readable storage medium stores a computer program, and the computer program is used to cause the processor to perform steps of the conflict processing method on the network device side as described above.

The beneficial effects of the foregoing technical solutions of the present disclosure are as follows:

In the above solutions, the terminal performs the first-conflict processing first and then other conflict processing, or performs the second-conflict processing first and then other conflict processing, for transmissions over OFDM symbols of the SBFD, which can avoid simultaneous transmissions in different directions over the same time, thereby solving the current lack of solutions for transmission conflicts between uplink and downlink transmissions in the SBFD system during the same time period.

### BRIEF DESCRIPTION OF THE DRAWINGS

FIG. 1 shows a schematic diagram of simultaneous uplink and downlink transmission through different subbands.
FIG. 2 shows a schematic flow chart of a conflict processing method at a terminal side according to an embodiment of the present disclosure.
FIG. 3 shows a first schematic diagram of uplink and downlink transmission on different subbands in the same timeslot according to an embodiment of the present disclosure.
FIG. 4 shows a second schematic diagram of uplink and downlink transmission on different subbands in the same timeslot according to an embodiment of the present disclosure.
FIG. 5 shows a third schematic diagram of uplink and downlink transmission on different subbands in the same timeslot according to an embodiment of the present disclosure.
FIG. 6 shows a fourth schematic diagram of uplink and downlink transmission on different subbands in the same timeslot according to an embodiment of the present disclosure.
FIG. 7 shows a fifth schematic diagram of uplink and downlink transmission on different subbands in the same timeslot according to an embodiment of the present disclosure.
FIG. 8 shows a schematic flow chart of a conflict processing method at a network device side according to an embodiment of the present disclosure.
FIG. 9 shows a block diagram of a conflict processing apparatus at a terminal side according to an embodiment of the present disclosure.
FIG. 10 shows a block diagram of a terminal according to an embodiment of the present disclosure.
FIG. 11 shows a block diagram of a conflict processing apparatus at a network device side according to an embodiment of the present disclosure.
FIG. 12 shows a block diagram of a network device according to an embodiment of the present disclosure.

### DETAILED DESCRIPTION

In order to make the technical problem to be solved, the technical solution, and the advantages of the present disclosure clearer, detailed descriptions will be given below in conjunction with the accompanying drawings and specific embodiments. In the following description, specific details such as specific configurations and components are provided merely to assist in a comprehensive understanding of the embodiments of the present disclosure. Therefore, it should be understood by those skilled in the art that various modifications and changes may be made to the embodiments described herein without departing from the scope and spirit of the present disclosure. In addition, for clarity and conciseness, descriptions of known functions and constructions are omitted.

It should be understood that "an embodiment" or "one embodiment" mentioned throughout the specification means that specific features, structures, or characteristics described in connection with the embodiment are included in at least one embodiment of the present disclosure. Therefore, the appearances of the phrases "in one embodiment" or "in an embodiment" in various places throughout the specification are not necessarily referring to the same embodiment. Furthermore, the specific features, structures, or characteristics described may be combined in one or more embodiments in any suitable manner.

In various embodiments of the present disclosure, it should be understood that the size of sequence numbers of the following processes does not imply any limitation on the execution order. The execution order of each process should be determined based on its function and inherent logic, which shall not impose any limitation on the implementation process of the present disclosure.

In addition, the terms "system" and "network" may be used interchangeably in the present disclosure.

The technical solutions provided by the embodiments of the present disclosure may be applicable to various systems, especially to the fifth generation mobile communication technology (5G) system. For example, applicable systems may include a Global System for Mobile Communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a New Radio (NR) system of 5G, and the like. These various systems include both terminal devices and network devices. A core network part may also be included, such as an Evolved Packet System (EPS) or a 5G System (5GS).

Between the network device and the terminal, Multiple Input Multiple Output (MIMO) transmission may be performed using one or more antennas, respectively. The MIMO transmission may be Single User MIMO (SU-MIMO) or Multiple User MIMO (MU-MIMO). According to the configuration and number of antenna elements, MIMO transmission may be 2-Dimensional MIMO (2D-MIMO), 3-Dimensional MIMO (3D-MIMO), Full Dimension MIMO (FD-MIMO), or massive MIMO. It may also be diversity transmission, precoding transmission, or beamforming transmission.

The term "and/or" in the embodiments of the present disclosure describes an association relationship of related objects, indicating that there may be three kinds of relationships. For example, "A and/or B" may mean: A alone, both A and B, or B alone. The character "/" generally indicates an "or" relationship between the related objects before and after the character.

The term "multiple" in the embodiments of the present disclosure refers to two or more, and other quantifiers have similar meanings.

The technical solutions of the embodiments of the present disclosure will be clearly and completely described below in conjunction with the accompanying drawings in the embodiments of the present disclosure. It is obvious that the described embodiments are only a part of, rather than all of, the embodiments of the present disclosure. Based on the embodiments of the present disclosure, all other embodiments obtained by those of ordinary skill in the art without creative efforts shall fall within the scope of the present disclosure.

The following introduces communication-related technologies involved in the present disclosure:

### 1. Subband Full Duplex

5G NR supports Time Division Duplexing (TDD) and Frequency Division Duplexing (FDD). TDD and FDD refer to two duplex communication modes in mobile communication technologies. In the TDD mode, sending and receiving are performed at different time instants on the same frequency channel or carrier, and uplink and downlink transmission resources are distinguished by time. In the FDD mode, sending and receiving are performed simultaneously on different frequency channels, and uplink and downlink transmission resources are distinguished by frequency.

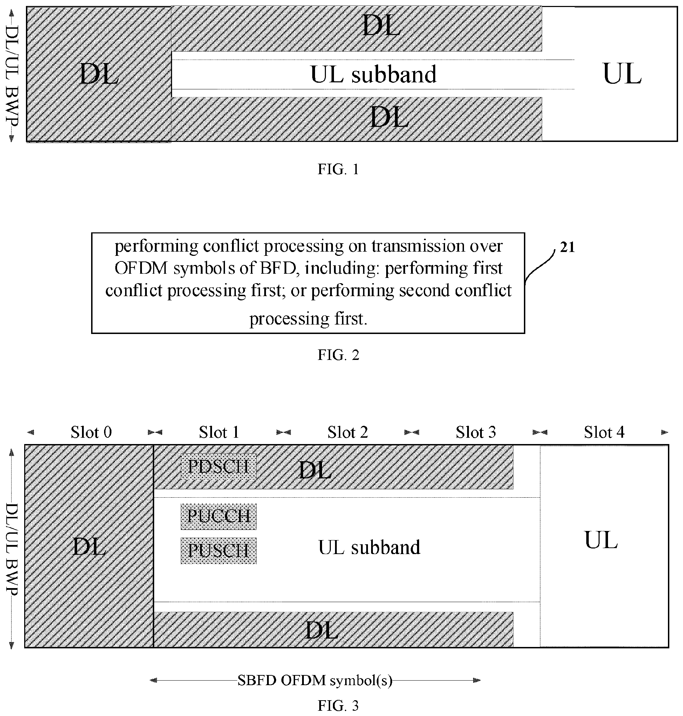

5G NR considers supporting subband non-overlapping full duplex, that is, the base station can simultaneously perform sending and receiving within a same frequency band, carrier, or Bandwidth Part (BWP) through different subbands, where the subbands for sending and receiving do not overlap. As shown in FIG. 1, the uplink subband (UL subband) exists in partial symbols and does not overlap with other frequency domain resources.

In an SBFD system, terminals that are aware of SBFD operation and terminals that are not aware of SBFD operation may coexist. For terminals that are not aware of SBFD operation, the terminal behavior is the same as traditional terminals. For terminals that are aware of SBFD operation, terminal enhancement can be performed. It has been supported to notify the terminals aware of SBFD operation of the time domain and frequency domain resources of uplink subbands in a semi-static manner.

### 2. Conflict Resolution

Orthogonal Frequency Division Multiplexing (OFDM) symbols can be divided into downlink symbols, uplink symbols, and flexible symbols. Downlink transmission is only supported on downlink symbols; uplink transmission is only supported on uplink symbols; either uplink or downlink transmission may occur on flexible symbols, but only one transmission direction is allowed at a time. For flexible symbols, configured uplink and configured downlink transmissions cannot coexist, and the network device side should also avoid scheduling both dynamic uplink and dynamic downlink transmissions simultaneously. On flexible symbols, in the case of a conflict between dynamic uplink and configured downlink transmissions or a conflict between dynamic downlink and configured uplink transmissions, the dynamic uplink or downlink transmission is prioritized, and the configured uplink or downlink transmission is discarded.

If the transmission direction of at least one OFDM symbol occupied by a physical channel or signal is different from the transmission direction of the physical channel or signal itself, the physical channel or signal is discarded. If a conflict exists between physical channels in the same transmission direction, some of the channels are reused or discarded according to predefined rules.

Since there is only one transmission direction on a single OFDM symbol, but in an SBFD system an OFDM symbol may contain two transmission directions, both uplink and downlink transmissions may simultaneously exist from the perspective of the network device. Thus, the network device may schedule or configure the terminal to perform transmissions in both transmission directions. In an SBFD scenario, to avoid increasing terminal complexity, only half-duplex terminals are supported, i.e., a terminal can only perform transmission in one direction within a time period. Therefore, in an SBFD system, a terminal may face a conflict between uplink and downlink transmissions. At present, there is no clear solution for resolving conflicts on SBFD symbols. The embodiments of the present disclosure provide a conflict processing method, apparatus, terminal, and network device, which can resolve the problem of transmission conflict between uplink and downlink transmissions that may exist in the same time period in an SBFD system.

The above-mentioned method and apparatus (or terminal or network device) are based on the same inventive concept. Since the principles for solving problems by the method and apparatus (or terminal or network device) are similar, the implementation of the method and apparatus (or terminal or network device) may refer to each other, and repeated parts are not described again.

As shown in FIG. 2, an embodiment of the present disclosure provides a conflict processing method applied to a terminal, which specifically includes the following steps:
Step 21: Performing conflict processing for transmissions on an OFDM symbol of SBFD, where the conflict processing includes at least one of the following:
performing first processing for a first conflict first; or
performing first processing for a second conflict first;
where the first conflict is a conflict between channels or signals in the same transmission direction, and the second conflict is a conflict between uplink channels or signals and downlink channels or signals.

Optionally, the first processing for the first conflict first includes: performing processing for the first conflict before performing processing for other conflicts, such as performing processing for the first conflict before performing processing for the second conflict. Correspondingly, the first processing for the second conflict first includes: performing processing for the second conflict before performing processing for other conflicts, such as performing processing for the second conflict before performing processing for the first conflict.

It should be noted that performing first processing for the first conflict means, in the context of both the first conflict and the second conflict, performing the first conflict processing first; and performing first processing for the second conflict means, in the context of both the first conflict and the second conflict, performing the second conflict processing first. It should also be noted that when other transmission conflicts exist on an SBFD OFDM symbol, the embodiments of the present disclosure are not limited to performing the processing of other conflicts before performing the first conflict processing or before performing the second conflict processing.

It should be noted that the conflict herein refers to overlap in the time domain: if channels/signals with the same transmission direction overlap in time domain, it is considered a first conflict; if channels/signals with different transmission directions overlap in time domain, it is considered a second conflict.

In the above solution, for transmissions on SBFD OFDM symbols, the terminal performs the first conflict processing first before other conflict processing, or performs the second conflict processing first before other conflict processing, which can avoid the problem of simultaneous transmissions in different directions at the same time on SBFD OFDM symbols, thereby solving the issue of unresolved transmission conflicts between uplink and downlink transmissions in the same time period in SBFD systems.

Optionally, after performing conflict processing, if the terminal resolves transmission conflicts on SBFD OFDM symbols, the terminal may perform transmission with the network device. In this way, terminals that are aware of SBFD operation in an SBFD system can be ensured to operate properly.

Optionally, the first conflict processing includes at least one of the following:
for multiple channels in the same transmission direction, transmitting a first channel, and multiplexing information carried on second channels (other than the first channel) onto the first channel, where the first channel is at least one of the multiple channels; or
for multiple channels in the same transmission direction, transmitting a target channel, and multiplexing information carried on the multiple channels onto the target channel, where the target channel is another channel in the same transmission direction as the multiple channels; or
for multiple channels or signals in the same transmission direction, discarding channels or signals determined based on predefined rules; or
for multiple channels or signals in the same transmission direction, transmitting channels or signals of a first priority, and discarding channels or signals of a second priority, where the first priority is higher than the second priority.

It should be noted that the first conflict processing only includes handling of channels or signals with the same transmission direction and either the same or different priorities, and does not include handling of conflicts between channels or signals and semi-statically scheduled uplink or downlink symbols, Slot Format Indicator (SFI), or Synchronization Signal Block (SSB).

Optionally, the predefined rules include but are not limited to: for example, when Hybrid Automatic Repeat Request Acknowledgement (HARQ-ACK) using Physical Uplink Control Channel (PUCCH) format 1 conflicts with Scheduling Request (SR) using PUCCH format 0, the SR is discarded; or when a Physical Uplink Shared Channel (PUSCH) not carrying Uplink Shared Channel (UL-SCH) conflicts with a positive SR, the PUSCH is discarded. Specifically, the conflict processing for the same transmission direction may refer to existing solutions in related technologies (e.g., conflict processing methods defined in 3GPP Rel-15/16/17 for the same transmission direction).

Optionally, the second conflict processing includes at least one of the following:
determining to transmit uplink channels or signals or downlink channels or signals based on predefined rules; or
determining to transmit uplink channels or signals or downlink channels or signals based on semi-static configuration information; or
determining to transmit uplink channels or signals or downlink channels or signals based on dynamic indication information.

Optionally, the semi-static configuration information may be configuration information of semi-statically configured channels that explicitly or implicitly indicate the transmission direction of the terminal, or configuration information (other than the configuration information of semi-statically configured channels) used to indicate the transmission direction of the terminal. The dynamic indication information may be indication information of dynamically scheduled channels that explicitly or implicitly indicate the transmission direction of the terminal, or indication information (other than the indication information of dynamically scheduled channels) used to indicate the transmission direction of the terminal.

For example, the terminal may determine to transmit channels or signals in a first transmission direction and discard channels or signals in a second transmission direction based on the semi-static configuration information indicating the terminal' s transmission direction (i.e., the first transmission direction). The transmission direction indicated in the configuration information is terminal-specific and indicates the transmission direction available to the terminal in SBFD symbols. Alternatively, the terminal may determine to transmit channels or signals in the first transmission direction and discard those in the second transmission direction based on the dynamic indication information indicating the terminal' s transmission direction (i.e., the first transmission direction).

Optionally, the predefined rules include at least one of the following:
in a case where there is a conflict between multiple semi-statically scheduled channels or signals having different transmission directions on an SBFD OFDM symbol, transmitting the channel or signal in a predefined transmission direction, wherein the predefined transmission direction is either uplink or downlink, that is, in a case of conflict between two semi-static channels or signals on an SBFD symbol, prioritizing the channel or signal in the predefined transmission direction; or
in a case where the transmission direction of a semi-statically scheduled channel or signal is different from that of a dynamically scheduled channel or signal on an SBFD OFDM symbol, transmitting the dynamically scheduled channel or signal, that is, in a case of conflict between a dynamic and a semi-static channel or signal on an SBFD symbol, prioritizing the dynamic channel or signal.

Optionally, in an SBFD system, a third conflict may also exist between the transmission direction of a physical channel or signal and the transmission direction of a physical resource, and there is currently no solution for such a conflict.

Furthermore, in an embodiment of the present disclosure, in a case where a third conflict exists between the transmission direction of a physical channel or signal and the transmission direction of a physical resource, the method further includes at least one of the following:
performing processing of the third conflict after performing the first conflict processing; or
performing processing of the third conflict before performing the first conflict processing; or
performing processing of the third conflict after performing the second conflict processing; or
performing processing of the third conflict before performing the second conflict processing.

For example: performing processing of the third conflict after the first conflict processing, that is, performing the first conflict processing first, then performing the third conflict processing. Optionally, after the third conflict processing, other transmission conflict processing may be performed. It should be noted that if there is no third conflict after the first conflict processing, the third conflict processing may be skipped, and other transmission conflict processing may be continued. Or, after the third conflict processing, if there is no other transmission conflict on the SBFD OFDM symbol, the conflict may be considered resolved and the terminal may perform transmission with the network device.

For example: performing processing of the third conflict before the first conflict processing, that is, performing the third conflict processing first, then performing the first conflict processing. Optionally, after the first conflict processing, other transmission conflict processing may be performed. It should be noted that if there is no first conflict on the SBFD OFDM symbol after the third conflict processing, the first conflict processing may be skipped, and other transmission conflict processing may be continued. Or, after the first conflict processing, if there is no other transmission conflict on the SBFD OFDM symbol, the conflict may be considered resolved and the terminal may perform transmission with the network device.

For example: performing processing of the third conflict after the second conflict processing, that is, performing the second conflict processing first, then performing the third conflict processing. Optionally, after the third conflict processing, other transmission conflict processing may be performed. It should be noted that when performing a specific conflict processing, if the conflict does not exist on the SBFD OFDM symbol, the conflict processing may be skipped, and the next conflict processing may be continued. For example, if there is no third conflict after the second conflict processing, the third conflict processing may be skipped, and other transmission conflict processing may be continued. Or, after the third conflict processing, if there is no other transmission conflict on the SBFD OFDM symbol, the conflict may be considered resolved and the terminal may perform transmission with the network device.

For example: performing processing of the third conflict before the second conflict processing, that is, performing the third conflict processing first, then performing the second conflict processing. Optionally, after the second conflict processing, other transmission conflict processing may be performed. It should be noted that when performing a specific conflict processing, if the conflict does not exist on the SBFD OFDM symbol, the conflict processing may be skipped, and the next conflict processing may be continued. For example, if there is no second conflict on the SBFD OFDM symbol after the third conflict processing, the second conflict processing may be skipped, and other transmission conflict processing may be continued. Or, after the second conflict processing, if there is no other transmission conflict on the SBFD OFDM symbol, the conflict may be considered resolved and the terminal may perform transmission with the network device.

For example: performing processing of the third conflict after performing the first conflict processing and before performing the second conflict processing, that is, after the first conflict processing, the third conflict processing is performed, followed by the second conflict processing. It should be noted that if the current conflict does not exist on the SBFD OFDM symbol when performing a certain conflict processing, such processing may be skipped, and the next conflict processing may be continued. For instance, after the first conflict processing, if no third conflict exists, the third conflict processing may be omitted, and the second conflict processing may be performed; or after the third conflict processing, if no second conflict exists, the second conflict processing may be omitted.

For example: under the circumstance where the first conflict processing is performed first, the third conflict processing is performed after the first conflict processing and also after the second conflict processing, that is, after performing the first and second conflict processing in sequence, the third conflict processing is then performed. It should be noted that if a certain conflict does not exist when being processed, the corresponding processing may be skipped, and the next conflict can be processed directly. For example, if no second conflict exists after the first conflict processing, the second conflict processing may be skipped, and the third conflict processing may proceed; or if no third conflict exists after the second conflict processing, it may be skipped.

For example: under the circumstance where the first conflict processing is performed first, the third conflict processing is performed after and before the first conflict processing, and also before the second conflict processing, that is, the third conflict is processed first, then after the first conflict processing, the third conflict processing is performed again, followed by the second conflict processing. It should be noted that if the current conflict does not exist on the SBFD OFDM symbol during the processing, it may be skipped. For example, if no first conflict exists after the first round of third conflict processing, the first conflict processing may be skipped, followed by another round of third conflict processing and then the second conflict processing; or if no second conflict exists after the second round of third conflict processing, the second conflict processing may be skipped.

For example: under the circumstance where the first conflict processing is performed first, the third conflict processing is performed after and before the first conflict processing, and also after the second conflict processing, that is, the third conflict is processed first, then after the first and second conflict processing, the third conflict is processed again. It should be noted that when a conflict does not exist on the SBFD OFDM symbol, its corresponding processing may be skipped. For instance, if no first conflict exists after the third conflict processing, the first conflict processing may be skipped, followed by the second conflict processing and then another round of third conflict processing; or if no third conflict exists after the second conflict processing, the third conflict processing may be skipped.

Optionally, after performing the second conflict processing and then the first conflict processing, performing the second conflict processing again. That is, the step of first performing the second conflict processing includes: after performing the second and then the first conflict processing, performing the second conflict processing again. Further optionally, the reprocessing of the second conflict includes: if a transmission conflict still exists on the SBFD OFDM symbol after performing the second and then the first conflict processing, the second conflict is processed again.

Optionally, when a third conflict exists between the transmission direction of a physical channel or signal and the transmission direction of a physical resource, the method further includes at least one of the following:
performing the third conflict processing after the first conflict processing; or
performing the third conflict processing before reprocessing the second conflict; or
performing the third conflict processing after reprocessing the second conflict; or
performing the third conflict processing before performing the second conflict processing.

For example: performing the third conflict processing after the first conflict processing or before reprocessing the second conflict may include: performing the third conflict processing after the first conflict processing and before reprocessing the second conflict.

For example: under the condition that the second conflict is processed first, then the first conflict, and the second conflict is processed again, it is required that the third conflict be processed after the first conflict processing. The third conflict processing after the first conflict may further include: performing the third conflict processing before or after reprocessing the second conflict. That is, after processing the first conflict, the second conflict may be processed again before the third conflict, or the third conflict may be processed first and then the second conflict. The specific method may be determined by configuration from the network device or a predefined agreement. It should be noted that if a certain conflict does not exist on the SBFD OFDM symbol during processing, it can be skipped and the next conflict can be processed.

For example: under the condition that the second conflict is processed first, then the first conflict, and the second conflict is processed again, it is required that the third conflict be processed after the first conflict and before reprocessing the second conflict. That is, after processing the second and first conflicts, the third conflict is processed first, followed by reprocessing the second conflict. It should be noted that if a certain conflict does not exist on the SBFD OFDM symbol during processing, it can be skipped and the next conflict can be processed.

For example: under the condition that the second conflict is processed first, then the first conflict, and the second conflict is processed again, it is required that the third conflict be processed after the first conflict and after reprocessing the second conflict. That is, after processing the second and first conflicts and reprocessing the second conflict, the third conflict is processed. It should be noted that if a certain conflict does not exist on the SBFD OFDM symbol during processing, it can be skipped and the next conflict can be processed.

For example: under the condition that the second conflict is processed first, then the first conflict, and the second conflict is processed again, it is required that the third conflict be processed after the first conflict, before reprocessing the second conflict, and before the first second conflict processing. That is, the third conflict is processed first, then after processing the second and first conflicts, the third conflict is processed again, followed by reprocessing the second conflict. It should be noted that if a certain conflict does not exist on the SBFD OFDM symbol during processing, it can be skipped and the next conflict can be processed.

For example: under the condition that the second conflict is processed first, then the first conflict, and the second conflict is processed again, it is required that the third conflict be processed after the first conflict, after reprocessing the second conflict, and before the first second conflict processing. That is, the third conflict is processed first, then after processing the second and first conflicts and reprocessing the second conflict, the third conflict is processed again. It should be noted that if a certain conflict does not exist on the SBFD OFDM symbol during processing, it can be skipped and the next conflict can be processed.

Optionally, considering that processing the first conflict may involve changes in channel location due to channel multiplexing, placing the first conflict processing after the second or third conflict processing may require repeated processing of the second or third conflict. Therefore, the preferred sequence is to perform the first conflict processing before the second or third conflict processing.

Optionally, the transmission direction of the physical resource is determined based on instructions from the network device on the resource element (RE); the transmission direction may be uplink, downlink, or flexible (i.e., both uplink and downlink are allowed).

The third conflict comprises: a transmission direction of at least one physical resource unit occupied by the physical channel or signal is different from a transmission direction of the physical channel or signal. If the physical channel or signal occupies multiple REs but no actual transmission is performed on the REs with different transmission directions, that is, resources with conflicts are avoided by means such as rate matching, it is not considered as a conflict.

Optionally, the processing of the third conflict comprises: discarding the physical channel or signal when the third conflict exists.

The terminal described in the embodiments of the present disclosure may refer to a device that provides voice and/or data connectivity to a user, such as a handheld device with wireless connection capability, or another processing device connected to a wireless modem. In different systems, the terminal may have different names. For example, in a 5G system, the terminal may be referred to as user equipment (UE). The wireless terminal device may communicate with one or more core networks (CNs) via a radio access network (RAN). The wireless terminal device may be a mobile terminal device, such as a mobile phone (also referred to as a "cellular" phone) and a computer equipped with a mobile terminal device, such as a portable, pocket-sized, handheld, built-in, or in-vehicle mobile device that exchanges voice and/or data with a radio access network. For example, the device may be a Personal Communication Service (PCS) phone, a cordless phone, a Session Initiated Protocol (SIP) phone, a Wireless Local Loop (WLL) station, a Personal Digital Assistant (PDA), etc. The wireless terminal device may also be referred to as a system, subscriber unit, subscriber station, mobile station, mobile, remote station, access point, remote terminal, access terminal, user terminal, user agent, or user device, which is not limited in the embodiments of the present disclosure.

The following describes the above method of the present disclosure with reference to specific embodiments:

### Embodiment 1: processing the first conflict first, and then processing the second conflict;

As shown in FIG. 3, Slot 1 comprises SBFD symbols, and there are conflicts between uplink channels as well as conflicts between uplink and downlink channels. First, the conflicts in the same transmission direction are processed, and then the conflicts between uplink and downlink channels/signals are processed.

In this embodiment, the conflict between PUCCH and PUSCH is processed first. The UCI (Uplink Control Information) carried by the PUCCH is multiplexed onto the PUSCH to obtain a PUSCH carrying the UCI, and the PUCCH is discarded. Then, the conflict between PUSCH and PDSCH (Physical Downlink Shared Channel) is processed. When one of the PUSCH or PDSCH is dynamically scheduled, the dynamically scheduled channel is preferred and the semi-statically configured channel is discarded. When both are semi-statically configured channels, a predefined rule is used to determine which one has a higher transmission priority. For example, the priority of PUSCH is always higher than that of PDSCH; or the priority of PDSCH is always higher than that of PUSCH; or when the PUSCH carries UCI (such as HARQ-ACK and/or Channel State Information (CSI)), the priority of PUSCH is higher than that of PDSCH. When the PUSCH does not carry UCI (HARQ-ACK and/or CSI), its priority is lower than that of PDSCH. Alternatively, if both are semi-statically configured channels, the one with higher priority may be determined based on the semi-static configuration. The network device configures this via UE-specific RRC signaling, wherein the downlink is given higher priority for UE A and the uplink is given higher priority for UE B. The terminal determines to transmit the channel with higher priority and discard the one with lower priority based on the predefined rules or configuration information.

### Embodiment 2: processing the first conflict first, then processing the second conflict, and further including a scenario where a third conflict exists;

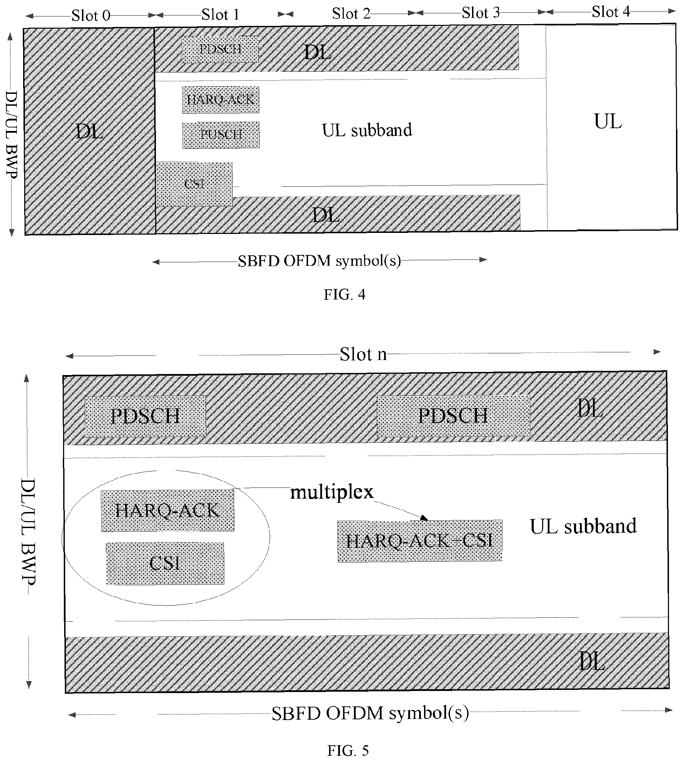

As shown in FIG. 4, Slot 1 comprises SBFD symbols, and there are conflicts among uplink channels, conflicts between uplink and downlink channels, and conflicts between uplink channels and physical resources. The conflicts may be handled by at least one of the following methods:
Method 1: processing the conflicts among uplink channels and downlink channels first, then processing the conflicts between uplink and downlink channels, and finally processing the conflicts between channels and physical resources. In this embodiment, the conflicts among PUCCHs and between PUCCH and PUSCH are processed first, i.e., both HARQ-ACK and CSI are multiplexed onto the PUSCH. Then the conflict between PUSCH and PDSCH is processed. For example, when one of the two conflicting channels with different transmission directions is dynamically scheduled, the dynamically scheduled channel is prioritized, and the semi-statically configured channel is discarded. If both are semi-statically configured channels, a predefined rule is used to determine the higher priority transmission. For example, uplink is always prioritized, or downlink is always prioritized, or control channels have higher priority than data channels. When both are data or both are control channels, either uplink or downlink is prioritized. Alternatively, the higher priority channel is determined based on semi-static configuration. Suppose that in this example the PUSCH is dynamically transmitted and the PDSCH is semi-statically transmitted, then the dynamic PUSCH is prioritized, and the PDSCH is discarded. Finally, conflicts between channels and physical resources are processed. Since no channels conflicting with physical resources remain after the previous two steps, HARQ-ACK and CSI are eventually transmitted on the PUSCH resources in this embodiment.
Mode 2: First processing conflicts between uplink channels and downlink channels, then processing conflicts between channels and physical resources, and finally processing conflicts between uplink and downlink channels. In this embodiment, conflicts between PUCCHs and between PUCCH and PUSCH are processed first, i.e., HARQ-ACK and CSI are multiplexed onto the PUSCH; then, conflicts between channels and physical resources are processed. Since no channels conflicting with physical resources remain after the previous step, this step does not require conflict resolution. Finally, conflicts between uplink and downlink channels are processed. Similar to Mode 1, conflicts are resolved based on predefined rules. Assuming that the PUSCH is dynamically scheduled and the PDSCH is semi-statically configured, the PUSCH is transmitted and the PDSCH is discarded. In this embodiment, HARQ-ACK and CSI are ultimately transmitted on the PUSCH resource.
Mode 3: First processing conflicts between channels and physical resources, then processing conflicts between uplink channels and downlink channels, then processing conflicts between channels and physical resources again, and finally processing conflicts between uplink and downlink channels. Since the PUCCH carrying CSI conflicts with the downlink subband (in this embodiment, it is assumed that the uplink subband can only transmit uplink channels and the downlink subband can only transmit downlink channels), the PUCCH carrying CSI is discarded; then, conflicts between uplink channels and between PUCCH and PUSCH are processed, i.e., HARQ-ACK is multiplexed onto the PUSCH for transmission; then, conflicts between channels and physical resources are processed again. Since no channels conflicting with physical resources remain at this step, it does not require conflict resolution. Finally, conflicts between the PUSCH carrying HARQ-ACK and the PDSCH are processed. Similar to Mode 1, the conflict is resolved based on predefined rules. Assuming the PUSCH is dynamically scheduled and the PDSCH is semi-statically configured, the PUSCH is transmitted and the PDSCH is discarded. In this embodiment, HARQ-ACK is ultimately transmitted on the PUSCH resource.
Mode 4: First processing conflicts between channels and physical resources, then processing conflicts between uplink channels and downlink channels, then processing conflicts between uplink and downlink channels, and finally processing conflicts between channels and physical resources again. The first two steps in this mode are the same as those in Mode 3. The third step processes conflicts between uplink and downlink channels, which are resolved based on predefined rules similar to Mode 1. Assuming the PUSCH is dynamically scheduled and the PDSCH is semi-statically configured, the PUSCH is transmitted and the PDSCH is discarded. In the fourth step, conflicts between channels and physical resources are processed. Since no channels conflicting with physical resources remain, this step does not require conflict resolution. In this embodiment, HARQ-ACK is ultimately transmitted on the PUSCH resource.

### Embodiment 3: First processing the second conflict, then processing the first conflict, and finally processing the second conflict again.

As shown in FIG. 5, the slot consists entirely of SBFD symbols, with conflicts existing both among uplink channels and between uplink and downlink channels. Conflicts between uplink and downlink channels/signals are processed first, followed by same-direction conflicts, and finally another round of processing for conflicts between uplink and downlink channels/signals.

In this embodiment, the conflict between PDSCH and HARQ-ACK and CSI is processed first. When uplink and downlink channels conflict, control channels are prioritized; thus, HARQ-ACK and CSI are transmitted and the PDSCH is discarded. Then, the same-direction conflict is processed, resolving the conflict between HARQ-ACK and CSI by multiplexing them onto a new PUCCH resource, which conflicts with another PDSCH. Finally, the conflict between uplink and downlink channels/signals is processed again. Assuming uplink control channels are prioritized, the other PDSCH is discarded in this step. In this embodiment, the ultimately transmitted content is the multiplexed HARQ-ACK and CSI.

### Embodiment 4: First processing the second conflict, then processing the first conflict, and finally processing the second conflict again, with an additional scenario involving a third conflict.

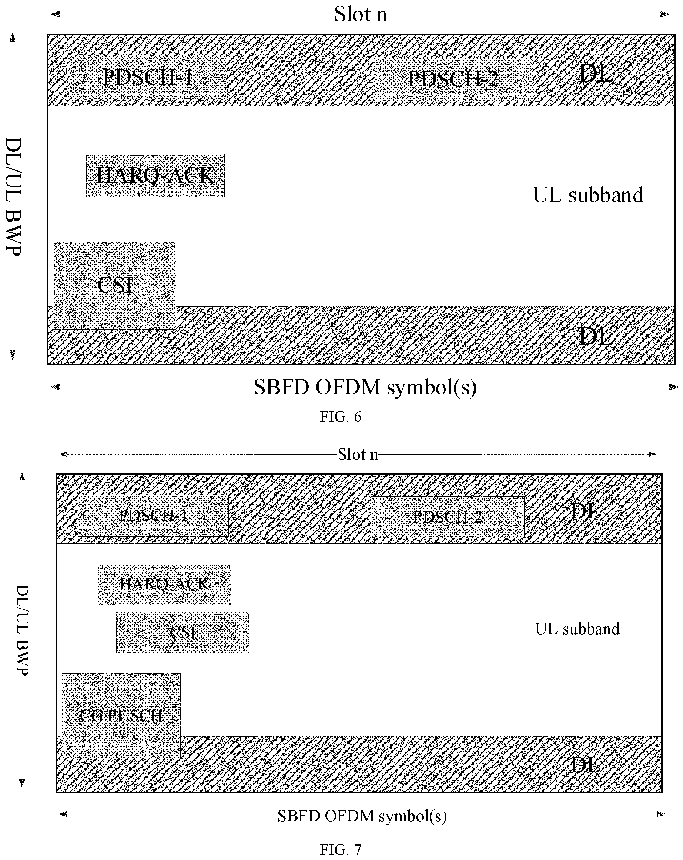

As shown in FIG. 6, the slot consists entirely of SBFD symbols, with conflicts existing among uplink channels, between uplink and downlink channels, and between uplink channels and physical resources. To resolve the above conflicts, at least one of the following processing modes may be applied:
Mode 1: First processing conflicts between uplink and downlink channels/signals, then processing same-direction conflicts, then processing conflicts between channels and physical resources, and finally processing conflicts between uplink and downlink channels/signals again. In this embodiment, the conflict between PDSCH-1 and HARQ-ACK and CSI is processed first. When uplink and downlink channels conflict, control channels are prioritized; thus, HARQ-ACK and CSI are transmitted and PDSCH-1 is discarded. Then, same-direction conflicts are processed, i.e., the conflict between HARQ-ACK and CSI.

For example, HARQ-ACK and CSI are multiplexed on the PUCCH resource of CSI. Then, conflicts between channels and physical resources are processed. Since the PUCCH resource carrying CSI conflicts with the transmission direction of the physical resource, HARQ-ACK and CSI are discarded. Finally, the conflict between uplink and downlink channels/signals is processed again. Since no conflicts remain after the previous steps, this step is not executed. In this embodiment, only PDSCH-2 is ultimately transmitted.

For example, HARQ-ACK and CSI are multiplexed onto another PUCCH resource overlapping with PDSCH-2; then, conflicts between channels and physical resources are processed. Since no such conflict exists at this time, this step is not performed. Finally, conflicts between uplink and downlink channels/signals are processed again. The conflict between the new PUCCH and PDSCH-2 is processed. Assuming the PUCCH has a higher priority, only the new PUCCH carrying HARQ-ACK and CSI is ultimately transmitted in this embodiment.

Mode 2: First processing conflicts between uplink and downlink channels/signals, then processing same-direction conflicts, processing conflicts between uplink and downlink channels/signals again, and finally processing conflicts between channels and physical resources. In this embodiment, the first two steps are the same as in Mode 1. The second step processes the conflict between HARQ-ACK and CSI,

for example, HARQ-ACK and CSI are multiplexed onto the PUCCH resource of CSI; conflicts between uplink and downlink channels/signals are processed again. Since there is no conflict in this step, this step is not performed. Finally, conflicts between channels and physical resources are processed. Since the PUCCH resource of CSI conflicts with the direction of the physical resources, HARQ-ACK and CSI are discarded. In this embodiment, only PDSCH-2 is ultimately transmitted.

For example, HARQ-ACK and CSI are multiplexed onto another PUCCH resource overlapping with PDSCH-2; then, conflicts between uplink and downlink channels/signals are processed. The conflict between the new PUCCH and PDSCH-2 is resolved. Assuming the new PUCCH has a higher priority, the new PUCCH is prioritized for transmission; finally, conflicts between channels and physical resources are processed. Since there is no such conflict at this time, this step is not performed. In this embodiment, only the new PUCCH carrying HARQ-ACK and CSI is ultimately transmitted.

As shown in FIG. 7, the slot consists entirely of SBFD symbols, with conflicts existing among uplink channels, between uplink and downlink channels, and between uplink channels and physical resources. At least one of the following processing methods may be applied to resolve the above conflicts:
Mode 1: First processing conflicts between channels and physical resources, then processing conflicts between uplink and downlink channels/signals, then processing same-direction conflicts, then processing conflicts between channels and physical resources again, and finally processing conflicts between uplink and downlink channels/signals. First, conflicts between channels and physical resources are processed. In this embodiment, the CG PUSCH is discarded; then, conflicts between uplink and downlink channels/signals are processed. Assuming the uplink transmission direction is prioritized, PDSCH-1 is discarded; then, same-direction conflicts are processed. HARQ-ACK and CSI are multiplexed onto a new PUCCH resource, which conflicts with PDSCH-2; conflicts between channels and physical resources are processed again, but this step is not performed; finally, the conflict between the new PUCCH and PDSCH-2 is processed. Assuming the new PUCCH is prioritized, PDSCH-2 is discarded. In this embodiment, HARQ-ACK and CSI are ultimately multiplexed and transmitted on the new PUCCH resource.
Mode 2: First processing conflicts between channels and physical resources, then processing conflicts between uplink and downlink channels/signals, then processing same-direction conflicts, then processing conflicts between uplink and downlink channels/signals again, and finally processing conflicts between channels and physical resources. First, conflicts between channels and physical resources are processed. In this embodiment, the CG PUSCH is discarded; then, conflicts between uplink and downlink channels/signals are processed. Assuming the uplink transmission direction is prioritized, PDSCH-1 is discarded; then, same-direction conflicts are processed. HARQ-ACK and CSI are multiplexed onto a new PUCCH resource, which conflicts with PDSCH-2; then, conflicts between uplink and downlink channels/signals are processed again. The conflict between the new PUCCH and PDSCH-2 is resolved. Assuming the new PUCCH is prioritized, PDSCH-2 is discarded. Finally, conflicts between channels and physical resources are processed, but this step is not performed. In this embodiment, HARQ-ACK and CSI are ultimately multiplexed and transmitted on the new PUCCH resource.

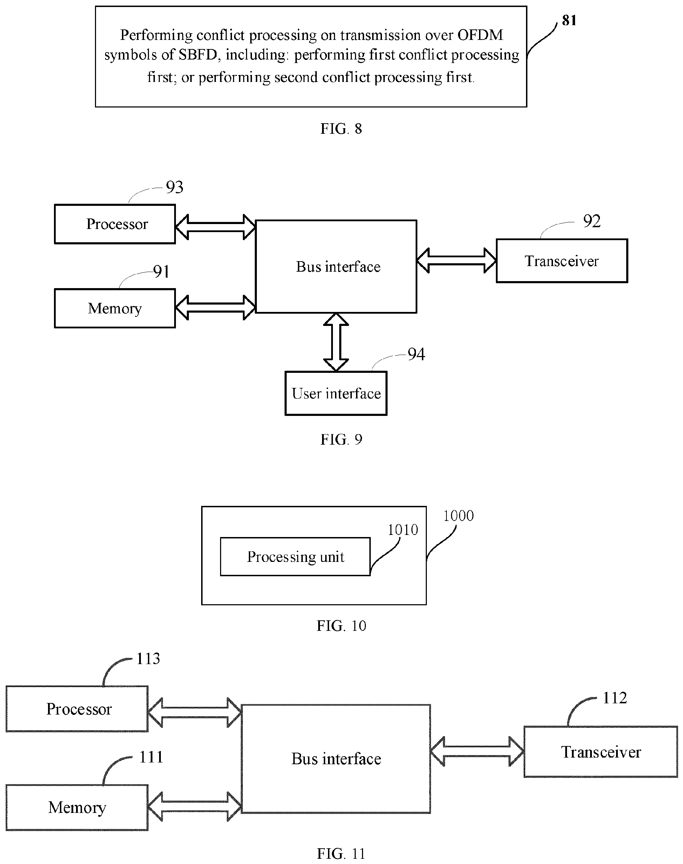

As shown in FIG. 8, this embodiment of the present disclosure further provides a conflict processing method, applied to a network device, and specifically includes the following steps:
Step 81: Performing conflict processing for transmissions on Orthogonal Frequency Division Multiplexing (OFDM) symbols in a SubBand Full Duplex (SBFD) system, wherein the conflict processing includes at least one of the following:
   performing first conflict processing first; or
   performing second conflict processing first;
   wherein the first conflict refers to a conflict between channels or signals with the same transmission direction, and the second conflict refers to a conflict between uplink and downlink channels or signals.

Optionally, performing the first conflict processing first includes: performing the first conflict processing first and then performing the second conflict processing;
and/or,
performing the second conflict processing first includes: performing the second conflict processing first and then performing the first conflict processing.

Optionally, performing the first conflict processing includes at least one of the following:
transmitting a first channel among multiple channels with the same transmission direction, and multiplexing information carried on second channels, except for the first channel, onto the first channel, wherein the first channel is at least one of the multiple channels; or
transmitting a target channel among multiple channels with the same transmission direction, and multiplexing information carried on the multiple channels onto the target channel, wherein the target channel is another channel having the same transmission direction as the multiple channels; or
discarding channels or signals determined based on predefined rules among multiple channels or signals with the same transmission direction; or
transmitting a first-priority channel or signal and discarding a second-priority channel or signal among multiple channels or signals with the same transmission direction, wherein the first priority is higher than the second priority.

Optionally, performing the second conflict processing includes at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rules include at least one of the following:
prohibiting transmission of semi-statically scheduled channels with different transmission directions on SBFD OFDM symbols, that is, prohibiting conflicts between two semi-static channels with different transmission directions in SBFD symbols; or
prohibiting transmission of dynamically scheduled channels with different transmission directions on SBFD OFDM symbols, that is, prohibiting conflicts between two dynamic channels with different transmission directions in SBFD symbols; or
in the case of a conflict between multiple semi-statically configured channels or signals with different transmission directions on SBFD OFDM symbols, transmitting the channel or signal in the predefined transmission direction, wherein the predefined transmission direction is uplink or downlink; or
in the case of a transmission direction conflict between a semi-statically configured channel or signal and a dynamically scheduled channel or signal on SBFD OFDM symbols, transmitting the dynamically scheduled channel or signal.

Optionally, in a case where there is a third conflict between the transmission direction of a physical channel or signal and the transmission direction of physical resources, at least one of the following is further included:
performing the third conflict processing after performing the first conflict processing; or
performing the third conflict processing before performing the first conflict processing; or
performing the third conflict processing after performing the second conflict processing; or
performing the third conflict processing before performing the second conflict processing.

Optionally, after performing the second conflict processing first and then the first conflict processing, the method further includes:
performing the second conflict processing again.

Optionally, performing the second conflict processing again includes:
if a transmission conflict still exists on the SBFD OFDM symbol after performing the second conflict processing and then the first conflict processing, performing the second conflict processing again.

Optionally, in a case where there is a third conflict between the transmission direction of a physical channel or signal and the transmission direction of physical resources, at least one of the following is further included:
performing the third conflict processing after performing the first conflict processing; or
performing the third conflict processing before performing the first conflict processing; or
performing the third conflict processing after performing the second conflict processing; or
performing the third conflict processing before performing the second conflict processing.

Optionally, the transmission direction of the physical resources is a transmission direction on physical resource elements determined based on an indication from a network device;
the third conflict includes: the transmission direction of at least one physical resource element occupied by the physical channel or signal is different from the transmission direction of the physical channel or signal.

Optionally, performing the third conflict processing includes:
discarding the physical channel or signal in the presence of the third conflict.

It should be noted that the conflict processing method for the network device side in the embodiments of the present disclosure is the same as the conflict processing method for the terminal side, and specific embodiments thereof may refer to each other. To avoid repetition, detailed descriptions are omitted here.

The network device in the embodiments of the present disclosure may be a base station, which may include multiple cells serving the terminals. Depending on specific application scenarios, the base station may also be referred to as an access point or a device in an access network that communicates with a wireless terminal device through one or more sectors over an air interface, or other names. The network device may be used to interconvert over-the-air frames and Internet Protocol (IP) packets, acting as a router between the wireless terminal device and the rest of the access network, where the rest of the access network may include an IP communication network. The network device may also coordinate attribute management of the air interface. For example, the network device in the embodiments of the present disclosure may be a Base Transceiver Station (BTS) in a Global System for Mobile communications (GSM) or Code Division Multiple Access (CDMA), a NodeB in Wideband CDMA (WCDMA), an evolved Node B (eNB or e-NodeB) in a Long Term Evolution (LTE) system, or a gNB in a next-generation 5G network architecture. It may also be a Home evolved Node B (HeNB), a relay node, a femtocell, a picocell, etc., which are not limited in the embodiments of the present disclosure. In some network architectures, the network device may include a Centralized Unit (CU) node and a Distributed Unit (DU) node, which may be geographically distributed.

The above embodiments describe the conflict processing method of the present disclosure. The following embodiments will further describe the corresponding apparatus, terminal, and network device with reference to the drawings.

As shown in FIG. 9, the present disclosure provides a conflict processing apparatus applied to a terminal, including a memory 91, a transceiver 92, and a processor 93. The memory 91 is configured to store a computer program. The transceiver 92 is configured to transmit and receive data under the control of the processor 93. For example, the transceiver 92 is configured to receive and transmit data under the control of the processor 93. The processor 93 is configured to read the computer program from the memory 91 and perform the following operations:
performing conflict processing for transmission on Orthogonal Frequency Division Multiplexing (OFDM) symbols of a SubBand Full Duplex (SBFD) system, where the conflict processing includes at least one of the following:
performing the first conflict processing first; or
performing the second conflict processing first;
where the first conflict refers to a conflict between channels or signals in the same transmission direction, and the second conflict refers to a conflict between uplink channels or signals and downlink channels or signals.

Optionally, performing the first conflict processing first includes: performing the first conflict processing first and then performing the second conflict processing;
and/or,
performing the second conflict processing first includes: performing the second conflict processing first and then performing the first conflict processing.

Optionally, performing the first conflict processing includes at least one of the following:
transmitting a first channel among multiple channels with the same transmission direction, and multiplexing information carried on second channels, except for the first channel, onto the first channel, wherein the first channel is at least one of the multiple channels; or
transmitting a target channel among multiple channels with the same transmission direction, and multiplexing information carried on the multiple channels onto the target channel, wherein the target channel is another channel having the same transmission direction as the multiple channels; or
discarding channels or signals determined based on predefined rules among multiple channels or signals with the same transmission direction; or
transmitting a first-priority channel or signal and discarding a second-priority channel or signal among multiple channels or signals with the same transmission direction, wherein the first priority is higher than the second priority.

Optionally, performing the second conflict processing includes at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rule includes at least one of the following:
when a conflict exists between multiple semi-statically configured channels or signals with different transmission directions on SBFD OFDM symbols, a channel or signal in a predefined transmission direction is transmitted; wherein the predefined transmission direction is uplink or downlink; or
when the transmission direction of a semi-statically configured channel or signal differs from the transmission direction of a dynamically scheduled channel or signal on SBFD OFDM symbols, the dynamically scheduled channel or signal is transmitted.

Optionally, when a third conflict exists between the transmission direction of a physical channel or signal and the transmission direction of a physical resource, the processor is configured to read the computer program from the memory and perform at least one of the following operations:
performing the third conflict processing after the first conflict processing; or
performing the third conflict processing before the first conflict processing; or
performing the third conflict processing after the second conflict processing; or
performing the third conflict processing before the second conflict processing.

Optionally, after performing the second conflict processing and then the first conflict processing, the processor is configured to read the computer program from the memory and perform the following operation:
performing the second conflict processing again.

Optionally, the processor is configured to read the computer program from the memory and perform the following operation:
if a transmission conflict still exists on the SBFD OFDM symbol after performing the second conflict processing and then the first conflict processing, the second conflict processing is performed again.

Optionally, when a third conflict exists between the transmission direction of a physical channel or signal and the transmission direction of a physical resource, the processor is configured to read the computer program from the memory and perform at least one of the following operations:
performing the third conflict processing after the first conflict processing; or
performing the third conflict processing before the first conflict processing; or
performing the third conflict processing after the second conflict processing; or
performing the third conflict processing before the second conflict processing.

Optionally, the transmission direction of the physical resource is a transmission direction on a physical resource unit determined based on an indication from a network device;
the third conflict comprises: the transmission direction of at least one physical resource unit occupied by the physical channel or signal differs from the transmission direction of the physical channel or signal.

Optionally, performing the third conflict processing includes:
discarding the physical channel or signal in the presence of the third conflict.

In FIG. 9, the bus architecture may include any number of interconnected buses and bridges, linking various circuits such as one or more processors represented by processor 93 and the memory represented by memory 91. The bus architecture may also connect various other circuits such as peripherals, regulators, and power management circuits, which are well known in the art and thus not described further herein. The bus interface provides the interface. The transceiver 92 may consist of multiple components, namely a transmitter and a receiver, and provides units for communicating with various other devices over transmission media including wireless channels, wired channels, optical cables, and the like. For different user equipment, user interface 94 may also be an interface capable of externally or internally connecting required devices, including but not limited to keypads, displays, speakers, microphones, joysticks, etc.

The processor 93 is responsible for managing the bus architecture and general processing, and the memory 91 may store data used by the processor 93 during operation.

Optionally, the processor 93 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor is configured to execute any of the methods provided in the embodiments of the present disclosure according to executable instructions obtained by invoking the computer program stored in the memory. The processor and the memory may also be physically arranged separately.

It should be noted that the device provided in the embodiment of the present disclosure can implement all the method steps of the terminal-side conflict processing method described in the corresponding embodiment and can achieve the same technical effects. Therefore, the parts that are the same as the method embodiments and the beneficial effects thereof are not described in detail again herein.

As shown in FIG. 10, an embodiment of the present disclosure further provides a terminal 1000, including:
a processing unit 1010, configured to perform conflict processing on transmission over Orthogonal Frequency Division Multiplexing (OFDM) symbols of Sub-Band Full Duplex (SBFD), the conflict processing comprising at least one of the following:
performing the first conflict processing first; or
performing the second conflict processing first;
wherein the first conflict is a conflict between channels or signals in the same transmission direction, and the second conflict is a conflict between uplink channels or signals and downlink channels or signals.

Optionally, performing the first conflict processing first includes: performing the first conflict processing first and then performing the second conflict processing;
and/or,
performing the second conflict processing first includes: performing the second conflict processing first and then performing the first conflict processing.

Optionally, the first conflict processing comprises at least one of the following:
transmitting a first channel among multiple channels in the same transmission direction, and multiplexing the information carried on a second channel other than the first channel onto the first channel; wherein the first channel is at least one of the multiple channels; or
transmitting a target channel among multiple channels in the same transmission direction, and multiplexing the information carried on the multiple channels onto the target channel; wherein the target channel is another channel in the same transmission direction; or
discarding a channel or signal determined according to a predefined rule from among multiple channels or signals in the same transmission direction;
transmitting a first-priority channel or signal and discarding a second-priority channel or signal from among multiple channels or signals in the same transmission direction; wherein the first priority is higher than the second priority.

Optionally, the second conflict processing comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rule includes at least one of the following:
when a conflict exists between multiple semi-statically configured channels or signals with different transmission directions on SBFD OFDM symbols, a channel or signal in a predefined transmission direction is transmitted; wherein the predefined transmission direction is uplink or downlink; or
when the transmission direction of a semi-statically configured channel or signal differs from that of a dynamically scheduled channel or signal on SBFD OFDM symbols, the dynamically scheduled channel or signal is transmitted.

Optionally, when a third conflict exists between the transmission direction of a physical channel or signal and the transmission direction of a physical resource, the processing unit 1010 is further configured to perform at least one of the following:
performing the third conflict processing after the first conflict processing; or
performing the third conflict processing before the first conflict processing; or
performing the third conflict processing after the second conflict processing; or
performing the third conflict processing before the second conflict processing.

Optionally, the processing unit 1010 is further configured to:
after performing the second conflict processing and then the first conflict processing, perform the second conflict processing again.

Optionally, the processing unit 1010 is further configured to:
after performing the second conflict processing and then the first conflict processing, if a transmission conflict still exists on the SBFD OFDM symbol, perform the second conflict processing again.

Optionally, when a third conflict exists between the transmission direction of a physical channel or signal and the transmission direction of a physical resource, the processing unit 1010 is further configured to perform at least one of the following:
performing the third conflict processing after the first conflict processing; or
performing the third conflict processing before the first conflict processing; or
performing the third conflict processing after the second conflict processing; or
performing the third conflict processing before the second conflict processing.

Optionally, the transmission direction of the physical resource is a transmission direction on a physical resource unit determined based on an indication from the network device.

The third conflict comprises: the transmission direction of at least one physical resource unit occupied by the physical channel or signal is different from the transmission direction of the physical channel or signal.

Optionally, processing the third conflict comprises:
discarding the physical channel or signal when the third conflict exists.

It should be noted that the above apparatus provided in the embodiment of the present disclosure can implement all the method steps realized by the terminal-side conflict processing method described above and can achieve the same technical effect. Therefore, the parts and advantages that are the same as those of the method embodiment are not repeated here.

As shown in FIG. 11, an embodiment of the present disclosure further provides a conflict processing apparatus, applied to a network device, comprising a memory 111, a transceiver 112, and a processor 113; wherein, the memory 111 is configured to store a computer program; the transceiver 112 is configured to send and receive data under the control of the processor; the processor 113 is configured to read the computer program from the memory 111 and perform the following operations:
performing conflict processing on transmission over Orthogonal Frequency Division Multiplexing (OFDM) symbols of Sub-Band Full Duplex (SBFD), the conflict processing comprising at least one of the following:
performing the first conflict processing first; or
performing the second conflict processing first;
wherein the first conflict is a conflict between channels or signals in the same transmission direction, and the second conflict is a conflict between uplink channels or signals and downlink channels or signals.

Optionally, performing the first conflict processing first includes: performing the first conflict processing first and then performing the second conflict processing;
and/or,
performing the second conflict processing first includes: performing the second conflict processing first and then performing the first conflict processing.

Optionally, the first conflict processing comprises at least one of the following:
transmitting a first channel among multiple channels in the same transmission direction, and multiplexing the information carried on a second channel other than the first channel onto the first channel; wherein the first channel is at least one of the multiple channels; or
transmitting a target channel among multiple channels in the same transmission direction, and multiplexing the information carried on the multiple channels onto the target channel; wherein the target channel is another channel in the same transmission direction;
discarding a channel or signal determined according to a predefined rule from among multiple channels or signals in the same transmission direction; or
transmitting a first-priority channel or signal and discarding a second-priority channel or signal from among multiple channels or signals in the same transmission direction; wherein the first priority is higher than the second priority.

Optionally, the second conflict processing comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

Optionally, the predefined rule includes at least one of the following:
different transmission direction semi-statically configured channels are not allowed to be transmitted on the SBFD OFDM symbol; or
different transmission direction dynamically scheduled channels are not allowed to be transmitted on the SBFD OFDM symbol; or
when a conflict exists between multiple semi-statically configured channels or signals with different transmission directions on SBFD OFDM symbols, a channel or signal in a predefined transmission direction is transmitted; wherein the predefined transmission direction is uplink or downlink;
when the transmission direction of a semi-statically configured channel or signal differs from that of a dynamically scheduled channel or signal on SBFD OFDM symbols, the dynamically scheduled channel or signal is transmitted.

Optionally, when a third conflict exists between the transmission direction of a physical channel or signal and the transmission direction of a physical resource, the processor is configured to read the computer program from the memory and perform at least one of the following operations:
performing the third conflict processing after performing the first conflict processing; or
performing the third conflict processing before performing the first conflict processing; or
performing the third conflict processing after performing the second conflict processing; or
performing the third conflict processing before performing the second conflict processing.

Optionally, after performing the second conflict processing and then performing the first conflict processing, the processor is configured to read the computer program from the memory and perform the following operation:
performing the second conflict processing again.

Optionally, the processor is configured to read the computer program from the memory and perform the following operation:
if a transmission conflict still exists on the SBFD OFDM symbol after performing the second conflict processing and then the first conflict processing, performing the second conflict processing again.

Optionally, when a third conflict exists between the transmission direction of a physical channel or signal and the transmission direction of a physical resource, the processor is configured to read the computer program from the memory and perform at least one of the following operations:
performing the third conflict processing after performing the first conflict processing; or
performing the third conflict processing before performing the first conflict processing; or
performing the third conflict processing after performing the second conflict processing; or
performing the third conflict processing before performing the second conflict processing.

Optionally, the transmission direction of the physical resource is a transmission direction on a physical resource unit determined based on an indication from the network device;
the third conflict comprises: the transmission direction of at least one physical resource unit occupied by the physical channel or signal is different from the transmission direction of the physical channel or signal.

Optionally, performing the third conflict processing comprises:
when the third conflict exists, discarding the physical channel or signal.

In FIG. 11, the bus architecture may include any number of interconnected buses and bridges, and various circuits linking together one or more processors represented by processor 113 and memory represented by memory 111. The bus architecture may also interconnect various other circuits such as peripheral devices, voltage regulators, and power management circuits, all of which are well known in the art and are not further described herein. The bus interface provides an interface. The transceiver 112 may comprise multiple components, i.e., including a transmitter and a receiver, which provide units for communication over transmission media with various other devices, including wireless channels, wired channels, optical cables, and other transmission media. The processor 113 is responsible for managing the bus architecture and general processing, and the memory 111 may store data used by the processor 113 during operation.

The processor 113 may be a Central Processing Unit (CPU), an Application Specific Integrated Circuit (ASIC), a Field-Programmable Gate Array (FPGA), or a Complex Programmable Logic Device (CPLD), and the processor may adopt a multi-core architecture.

It should be noted that the apparatus provided in this embodiment of the present disclosure can implement all the method steps of the network-side conflict processing method embodiment described above, and can achieve the same technical effects. Therefore, the parts identical to those in the method embodiment and their beneficial effects will not be described in detail herein.

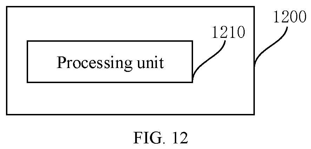

As shown in FIG. 12, an embodiment of the present disclosure further provides a network device 1200, comprising:
a processing unit 1210, configured to perform conflict processing on transmission over Orthogonal Frequency Division Multiplexing (OFDM) symbols of Sub-Band Full Duplex (SBFD), the conflict processing comprising at least one of the following:
performing the first conflict processing first; or
performing the second conflict processing first;
wherein the first conflict is a conflict between channels or signals in the same transmission direction, and the second conflict is a conflict between uplink channels or signals and downlink channels or signals.

Optionally, performing the first conflict processing first comprises: performing the first conflict processing first and then performing the second conflict processing;
and/or,
performing the second conflict processing first comprises: performing the second conflict processing first and then performing the first conflict processing.

Optionally, the first conflict processing comprises at least one of the following:
transmitting a first channel among multiple channels in the same transmission direction, and multiplexing the information carried on a second channel other than the first channel onto the first channel; wherein the first channel is at least one of the multiple channels; or
transmitting a target channel among multiple channels in the same transmission direction, and multiplexing the information carried on the multiple channels onto the target channel; wherein the target channel is another channel in the same transmission direction; or
discarding a channel or signal determined based on a predefined rule from among multiple channels or signals in the same transmission direction; or
transmitting a first-priority channel or signal and discarding a second-priority channel or signal from among multiple channels or signals in the same transmission direction; wherein the first priority is higher than the second priority.

Optionally, the second conflict processing comprises at least one of the following:
determining to transmit an uplink channel or signal, or a downlink channel or signal, based on a predefined rule;
determining to transmit an uplink channel or signal, or a downlink channel or signal, based on semi-static configuration information;
determining to transmit an uplink channel or signal, or a downlink channel or signal, based on dynamic indication information.

Optionally, the predefined rule includes at least one of the following:
different transmission directions of semi-statically configured channels are not allowed to be transmitted on the SBFD OFDM symbols; or
different transmission directions of dynamically scheduled channels are not allowed to be transmitted on the SBFD OFDM symbols; or
when a conflict exists between multiple semi-statically configured channels or signals with different transmission directions on SBFD OFDM symbols, a channel or signal in a predefined transmission direction is transmitted; wherein the predefined transmission direction is uplink or downlink;
when the transmission direction of a semi-statically configured channel or signal is different from that of a dynamically scheduled channel or signal on SBFD OFDM symbols, the dynamically scheduled channel or signal is transmitted.

Optionally, when a third conflict exists between the transmission direction of a physical channel or signal and the transmission direction of a physical resource, the processing unit 1210 is further configured to perform at least one of the following:
performing the third conflict processing after the first conflict processing; or
performing the third conflict processing before the first conflict processing; or
performing the third conflict processing after the second conflict processing; or
480. performing the third conflict processing before the second conflict processing.

Optionally, the processing unit 1210 is further configured to:
after performing the second conflict processing and then the first conflict processing, perform the second conflict processing again.

Optionally, the processing unit 1210 is further configured to:
after performing the second conflict processing and then the first conflict processing, if a transmission conflict still exists on the SBFD OFDM symbol, perform the second conflict processing again.

Optionally, when a third conflict exists between the transmission direction of a physical channel or signal and the transmission direction of a physical resource, the processing unit 1210 is further configured to perform at least one of the following:
performing the third conflict processing after the first conflict processing; or
performing the third conflict processing before the first conflict processing; or
performing the third conflict processing after the second conflict processing; or
performing the third conflict processing before the second conflict processing.

Optionally, the transmission direction of the physical resource is a transmission direction on a physical resource unit determined based on an indication from the network device;
the third conflict comprises: the transmission direction of at least one physical resource unit occupied by the physical channel or signal is different from the transmission direction of the physical channel or signal.

Optionally, performing the third conflict processing comprises:
when the third conflict exists, discarding the physical channel or signal.

It should be noted that the apparatus provided in this embodiment of the present disclosure can implement all the method steps of the network-side conflict processing method embodiment described above, and can achieve the same technical effects. Therefore, the parts identical to those in the method embodiment and their beneficial effects will not be described in detail herein.

It should be noted that the division of units in the embodiments of the present disclosure is illustrative and merely represents one logical functional division. In actual implementation, other divisions may be adopted. In addition, each functional unit in the various embodiments of the present disclosure may be integrated into one processing unit, or each unit may exist independently in physical form, or two or more units may be integrated into one unit. The integrated units may be implemented in the form of hardware, or implemented in the form of software functional units.

When the integrated units are implemented in the form of software functional units and sold or used as independent products, they may be stored in a processor-readable storage medium. Based on this understanding, the technical solutions of the present disclosure, or the part of the technical solutions that contributes to the related art, or the entire or part of the technical solution, may be embodied as a software product. The computer software product is stored in a storage medium and includes several instructions for causing a computer device (which may be a personal computer, server, or network device, etc.) or a processor to execute all or part of the steps of the method described in the embodiments of the present disclosure. The aforementioned storage medium includes various media capable of storing program code, such as USB flash drives, mobile hard disks, read-only memory (ROM), random access memory (RAM), magnetic disks, or optical disks.

An embodiment of the present disclosure further provides a processor-readable storage medium storing a computer program, wherein the computer program is configured to cause the processor to execute the steps of the terminal-side conflict processing method described above, or the computer program is configured to cause the processor to execute the steps of the network-side conflict processing method described above. The same technical effects can be achieved, and therefore the parts identical to those in the method embodiments and their beneficial effects will not be described again.

The processor-readable storage medium may be any available medium or data storage device accessible by the processor, including but not limited to magnetic storage devices (e.g., floppy disks, hard disks, magnetic tapes, magneto-optical disks (MO)), optical storage devices (e.g., CD, DVD, BD, HVD), and semiconductor memory devices (e.g., ROM, EPROM, EEPROM, non-volatile memory such as NAND FLASH, solid-state drives (SSD)).

It should be understood by those skilled in the art that the embodiments of the present disclosure may be provided as a method, a system, or a computer program product. Therefore, the present disclosure may take the form of a hardware embodiment, a software embodiment, or an embodiment combining software and hardware. Furthermore, the present disclosure may be embodied as a computer program product implemented on one or more computer-usable storage media (including but not limited to disk storage devices and optical storage devices) containing computer-usable program code.

The present disclosure is described with reference to the flowcharts and/or block diagrams of the methods, devices (systems), and computer program products according to embodiments of the present disclosure. It should be understood that each process and/or block in the flowcharts and/or block diagrams can be implemented by computer-executable instructions. These computer-executable instructions can be provided to a general-purpose computer, special-purpose computer, embedded processor, or other programmable data processing device to produce a machine, such that the instructions executed by the processor of the computer or other programmable data processing device perform the functions specified in one or more blocks in the flowcharts and/or block diagrams.

These computer-executable instructions may also be stored in a processor-readable storage medium that can guide a computer or other programmable data processing device to operate in a specific manner, such that the instructions stored in the processor-readable storage medium produce a manufactured article that includes an instruction device to perform the function specified in one or more blocks in the flowcharts and/or block diagrams.

These computer-executable instructions may also be loaded onto a computer or other programmable data processing device to cause a series of operational steps to be performed on the computer or other programmable device, resulting in a computer-implemented process such that the instructions executed on the computer or other programmable device perform the functions specified in one or more blocks in the flowcharts and/or block diagrams.

Furthermore, it should be noted that in the devices and methods of the present disclosure, each component or step may obviously be decomposed and/or recombined. These decompositions and/or recombinations shall be regarded as equivalent solutions of the present disclosure. Moreover, the steps of performing the above series of processing may be executed sequentially in chronological order as described, but are not necessarily limited to such chronological execution; some steps may be performed in parallel or independently. Those of ordinary skill in the art will understand that all or any of the steps or components of the methods and devices of the present disclosure can be implemented in any computing device (including processor, storage medium, etc.) or a network of computing devices using hardware, firmware, software, or a combination thereof. This can be realized by those skilled in the art with basic programming skills upon reading the description of the present disclosure.

It is apparent that those skilled in the art can make various modifications and variations to the present disclosure without departing from the spirit and scope of the present disclosure. Thus, if such modifications and variations of the present disclosure fall within the scope of the claims and their equivalents, the present disclosure is intended to cover such modifications and variations as well.

## Claims

1. A conflict processing method applied to a terminal, comprising:
performing conflict processing on transmission over Orthogonal Frequency Division Multiplexing (OFDM) symbols of Sub-Band Full Duplex (SBFD),
wherein the conflict processing comprises at least one of the following:
executing first conflict processing first; or
executing second conflict processing first;
wherein the first conflict refers to a conflict between channels or signals having a same transmission direction; and
the second conflict refers to a conflict between uplink channels or signals and downlink channels or signals.

2. The method according to claim 1, wherein executing first conflict processing first comprises:
executing the first conflict processing and then executing the second conflict processing;
and/or,
executing second conflict processing first comprises:
executing the second conflict processing and then executing the first conflict processing.

3. The method according to claim 1 or 2, wherein the first conflict processing comprises at least one of the following:
transmitting a first channel among multiple channels having a same transmission direction, and multiplexing information carried on a second channel other than the first channel onto the first channel, wherein the first channel is at least one of the multiple channels;
transmitting a target channel among multiple channels having a same transmission direction, and multiplexing information carried on the multiple channels onto the target channel, wherein the target channel is another channel having the same transmission direction;
discarding a channel or signal determined based on a predefined rule from among multiple channels or signals having a same transmission direction;
transmitting a first-priority channel or signal and discarding a second-priority channel or signal from among multiple channels or signals having a same transmission direction, wherein the first priority is higher than the second priority.

4. The method according to claim 1 or 2, wherein the second conflict processing comprises at least one of the following:
determining to transmit an uplink channel or signal or a downlink channel or signal based on a predefined rule;
determining to transmit an uplink channel or signal or a downlink channel or signal based on semi-static configuration information;
determining to transmit an uplink channel or signal or a downlink channel or signal based on dynamic indication information.

5. The method according to claim 4, wherein the predefined rule comprises at least one of the following:
when a conflict exists between multiple semi-statically configured channels or signals having different transmission directions on the SBFD OFDM symbol, a channel or signal in a predefined transmission direction is transmitted, wherein the predefined transmission direction is uplink or downlink;
when the transmission direction of a semi-statically configured channel or signal is different from the transmission direction of a dynamically scheduled channel or signal on the SBFD OFDM symbol, the dynamically scheduled channel or signal is transmitted.

6. The method according to claim 1 or 2, wherein, when a third conflict exists between a transmission direction of a physical channel or signal and a transmission direction of a physical resource, the method further comprises at least one of the following:
performing processing on the third conflict after performing processing on the first conflict; or
performing processing on the third conflict before performing processing on the first conflict; or
performing processing on the third conflict after performing processing on the second conflict; or
performing processing on the third conflict before performing processing on the second conflict.

7. The method according to claim 2, wherein, after performing processing on the second conflict and then performing processing on the first conflict, the method further comprises:
performing processing on the second conflict again.

8. The method according to claim 7, wherein the processing on the second conflict again comprises:
when a transmission conflict still exists on the SBFD OFDM symbol after performing processing on the second conflict and then performing processing on the first conflict, performing processing on the second conflict again.

9. The method according to claim 7 or 8, wherein, when a third conflict exists between a transmission direction of a physical channel or signal and a transmission direction of a physical resource, the method further comprises at least one of the following:
performing processing on the third conflict after performing processing on the first conflict; or
performing processing on the third conflict before performing processing on the first conflict; or
performing processing on the third conflict after performing processing on the second conflict; or
performing processing on the third conflict before performing processing on the second conflict.

10. The method according to claim 6 or 9, wherein the transmission direction of the physical resource is determined based on an indication from a network device for a physical resource unit, and the third conflict comprises a difference between a transmission direction of at least one physical resource unit occupied by the physical channel or signal and the transmission direction of the physical channel or signal.

11. The method according to claim 6 or 9, wherein the processing on the third conflict comprises:
discarding the physical channel or signal when the third conflict exists.

12. A conflict processing method, applied to a network device, comprising:
performing conflict processing on transmission over Orthogonal Frequency Division Multiplexing (OFDM) symbols of Sub-Band Full Duplex (SBFD), the conflict processing comprising at least one of the following:
performing processing on a first conflict first; or
performing processing on a second conflict first;
wherein the first conflict is a conflict between channels or signals in the same transmission direction, and the second conflict is a conflict between uplink channels or signals and downlink channels or signals.

13. The method according to claim 12, wherein performing the first conflict processing first comprises performing the first conflict processing first and then performing the second conflict processing;
and/or,
performing the second conflict processing first comprises performing the second conflict processing first and then performing the first conflict processing.

14. The method according to claim 12 or 13, wherein the first conflict processing comprises at least one of the following:
transmitting a first channel among multiple channels in the same transmission direction, and multiplexing information carried on a second channel other than the first channel onto the first channel, wherein the first channel is at least one of the multiple channels;
transmitting a target channel among multiple channels in the same transmission direction, and multiplexing information carried on the multiple channels onto the target channel, wherein the target channel is another channel in the same transmission direction;
discarding a channel or signal determined according to a predefined rule from among multiple channels or signals in the same transmission direction;
transmitting a first-priority channel or signal and discarding a second-priority channel or signal from among multiple channels or signals in the same transmission direction, wherein the first priority is higher than the second priority.

15. The method according to claim 12 or 13, wherein the second conflict processing comprises at least one of the following:
determining to transmit an uplink channel or signal or a downlink channel or signal based on a predefined rule;
determining to transmit an uplink channel or signal or a downlink channel or signal based on semi-static configuration information;
determining to transmit an uplink channel or signal or a downlink channel or signal based on dynamic indication information.

16. The method according to claim 15, wherein the predefined rule comprises at least one of the following:
transmission of semi-statically configured channels in different transmission directions is not allowed on SBFD OFDM symbols; or
transmission of dynamically scheduled channels in different transmission directions is not allowed on SBFD OFDM symbols; or
when a conflict exists between multiple semi-statically configured channels or signals with different transmission directions on SBFD OFDM symbols, a channel or signal in a predefined transmission direction is transmitted, wherein the predefined transmission direction is uplink or downlink;
when the transmission direction of a semi-statically configured channel or signal differs from that of a dynamically scheduled channel or signal on SBFD OFDM symbols, the dynamically scheduled channel or signal is transmitted.

17. The method according to claim 12 or 13, wherein, when a third conflict exists between a transmission direction of a physical channel or signal and a transmission direction of a physical resource, the method further comprises at least one of:
after performing the first conflict processing, performing the third conflict processing; or
before performing the first conflict processing, performing the third conflict processing; or
after performing the second conflict processing, performing the third conflict processing; or
before performing the second conflict processing, performing the third conflict processing.

18. The method according to claim 13, wherein, after performing the second conflict processing and then performing the first conflict processing, the method further comprises:
performing the second conflict processing again.

19. The method according to claim 18, wherein performing the second conflict processing again comprises:
if, after performing the second conflict processing and then performing the first conflict processing, a transmission conflict still exists on the SBFD OFDM symbol, performing the second conflict processing again.

20. The method according to claim 18 or 19, wherein, when a third conflict exists between a transmission direction of a physical channel or signal and a transmission direction of a physical resource, the method further comprises at least one of:
after performing the first conflict processing, performing the third conflict processing; or
before performing the first conflict processing, performing the third conflict processing; or
after performing the second conflict processing, performing the third conflict processing; or
before performing the second conflict processing, performing the third conflict processing.

21. The method according to claim 17 or 20, wherein the transmission direction of the physical resource is a transmission direction on a physical resource element determined based on an indication from a network device; and
wherein the third conflict comprises: a transmission direction of at least one physical resource element occupied by the physical channel or signal being different from a transmission direction of the physical channel or signal.

22. The method according to claim 17 or 20, wherein the third conflict processing comprises:
discarding the physical channel or signal when the third conflict exists.

23. A conflict processing apparatus applied to a terminal, comprising a memory, a transceiver, and a processor;
wherein the memory is configured to store a computer program;
the transceiver is configured to transmit and receive data under control of the processor;
the processor is configured to read the computer program stored in the memory and execute the following operations:
performing conflict processing on a transmission over Orthogonal Frequency Division Multiplexing (OFDM) symbols of Sub-Band Full Duplex (SBFD), the conflict processing comprising at least one of:
performing the first conflict processing first; or
performing the second conflict processing first;
wherein the first conflict is a conflict between channels or signals in a same transmission direction, and the second conflict is a conflict between uplink channels or signals and downlink channels or signals.

24. The conflict processing apparatus according to claim 23, wherein performing the first conflict processing first comprises: performing the first conflict processing first and then performing the second conflict processing;
and/or,
performing the second conflict processing first comprises: performing the second conflict processing first and then performing the first conflict processing.

25. The conflict processing apparatus according to claim 23 or 24, wherein the first conflict processing comprises at least one of the following:
transmitting a first channel among multiple channels in the same transmission direction, and multiplexing information carried on a second channel other than the first channel onto the first channel; wherein the first channel is at least one of the multiple channels; or
transmitting a target channel among multiple channels in the same transmission direction, and multiplexing information carried on the multiple channels onto the target channel; wherein the target channel is another channel in the same transmission direction; or
discarding, from among the multiple channels or signals in the same transmission direction, a channel or signal determined based on a predefined rule; or
transmitting a first-priority channel or signal and discarding a second-priority channel or signal from among the multiple channels or signals in the same transmission direction; wherein the first priority is higher than the second priority.

26. The conflict processing apparatus according to claim 23 or 24, wherein the second conflict processing comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

27. The conflict processing apparatus according to claim 26, wherein the predefined rule comprises at least one of the following:
when a conflict exists between multiple semi-statically configured channels or signals with different transmission directions on the SBFD OFDM symbol, transmitting a channel or signal in a predefined transmission direction; wherein the predefined transmission direction is uplink or downlink; or
when the transmission direction of a semi-statically configured channel or signal is different from the transmission direction of a dynamically scheduled channel or signal on the SBFD OFDM symbol, transmitting the dynamically scheduled channel or signal.

28. The conflict processing apparatus according to claim 23 or 24, wherein, when a third conflict exists between a transmission direction of a physical channel or signal and a transmission direction of a physical resource, the processor is configured to read the computer program stored in the memory and execute at least one of the following operations:
after performing the first conflict processing, performing the third conflict processing; or
before performing the first conflict processing, performing the third conflict processing; or
after performing the second conflict processing, performing the third conflict processing; or
before performing the second conflict processing, performing the third conflict processing.

29. The conflict processing apparatus according to claim 24, wherein after performing the second conflict processing and then the first conflict processing, the processor is configured to:
perform the second conflict processing again.

30. The conflict processing apparatus according to claim 29, wherein the processor is configured to:
if, after performing the second conflict processing and then the first conflict processing, a transmission conflict still exists on the SBFD OFDM symbol, perform the second conflict processing again.

31. The conflict processing apparatus according to claim 29 or 30, wherein, when a third conflict exists between a transmission direction of a physical channel or signal and a transmission direction of a physical resource, the processor is configured to read the computer program from the memory and execute at least one of the following operations:
after performing processing of the first conflict, performing processing of the third conflict; or
before performing processing of the first conflict, performing processing of the third conflict; or
after performing processing of the second conflict, performing processing of the third conflict; or
before performing processing of the second conflict, performing processing of the third conflict.

32. The conflict processing apparatus according to claim 28 or 31, wherein the transmission direction of the physical resource is a transmission direction on a physical resource unit determined based on an instruction from a network device;
wherein the third conflict comprises that the transmission direction of at least one physical resource unit occupied by the physical channel or signal is different from the transmission direction of the physical channel or signal.

33. The conflict processing apparatus according to claim 28 or 31, wherein processing of the third conflict comprises:
when the third conflict exists, discarding the physical channel or signal.

34. A terminal, comprising:
a processing unit, configured to perform conflict processing on a transmission over Orthogonal Frequency Division Multiplexing (OFDM) symbols of Sub-Band Full Duplex (SBFD), the conflict processing comprising at least one of the following:
performing processing of a first conflict first; or
performing processing of a second conflict first;
wherein the first conflict is a conflict between channels or signals in the same transmission direction, and the second conflict is a conflict between uplink channels or signals and downlink channels or signals.

35. The terminal according to claim 34, wherein performing the processing of the first conflict first comprises: performing the processing of the first conflict and then performing the processing of the second conflict;
and/or, performing the processing of the second conflict first comprises: performing the processing of the second conflict and then performing the processing of the first conflict.

36. The terminal according to claim 34 or 35, wherein the processing of the first conflict comprises at least one of the following:
transmitting a first channel among multiple channels in the same transmission direction, and multiplexing information carried on a second channel other than the first channel onto the first channel; wherein the first channel is at least one of the multiple channels; or
transmitting a target channel among multiple channels in the same transmission direction, and multiplexing the information carried on the multiple channels onto the target channel; wherein the target channel is another channel in the same transmission direction; or
discarding a channel or signal determined based on a predefined rule among multiple channels or signals in the same transmission direction; or
transmitting a first-priority channel or signal and discarding a second-priority channel or signal among multiple channels or signals in the same transmission direction; wherein the first priority is higher than the second priority.

37. The terminal according to claim 34 or 35, wherein the processing of the second conflict comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

38. The terminal according to claim 37, wherein the predefined rule comprises at least one of the following:
when a conflict exists between multiple semi-statically configured channels in different transmission directions on SBFD OFDM symbols, transmitting a channel or signal in a predefined transmission direction; wherein the predefined transmission direction is uplink or downlink; or
when the transmission direction of a semi-statically configured channel or signal differs from the transmission direction of a dynamically scheduled channel or signal on SBFD OFDM symbols, transmitting the dynamically scheduled channel or signal.

39. The terminal according to claim 34 or 35, wherein, when a third conflict exists between a transmission direction of a physical channel or signal and a transmission direction of a physical resource, the processing unit is further configured to perform at least one of the following:
after performing processing of the first conflict, performing processing of the third conflict; or
before performing processing of the first conflict, performing processing of the third conflict; or
after performing processing of the second conflict, performing processing of the third conflict; or
before performing processing of the second conflict, performing processing of the third conflict.

40. The terminal according to claim 35, wherein the processing unit is further configured to:
after performing processing of the second conflict and then performing processing of the first conflict, perform the processing of the second conflict again.

41. The terminal according to claim 40, wherein the processing unit is further configured to:
after performing processing of the second conflict and then performing processing of the first conflict, if a transmission conflict still exists on the SBFD OFDM symbol, perform the processing of the second conflict again.

42. The terminal according to claim 40 or 41, wherein, when a third conflict exists between a transmission direction of a physical channel or signal and a transmission direction of a physical resource, the processing unit is further configured to perform at least one of the following:
after performing processing of the first conflict, performing processing of the third conflict; or
before performing processing of the first conflict, performing processing of the third conflict; or
after performing processing of the second conflict, performing processing of the third conflict; or
before performing processing of the second conflict, performing processing of the third conflict.

43. The terminal according to claim 39 or 42, wherein the transmission direction of the physical resource is a transmission direction on a physical resource unit determined based on an instruction from a network device;
wherein the third conflict comprises that the transmission direction of at least one physical resource unit occupied by the physical channel or signal is different from the transmission direction of the physical channel or signal.

44. The terminal according to claim 39 or 42, wherein processing of the third conflict comprises:
when the third conflict exists, discarding the physical channel or signal.

45. A processor-readable storage medium, wherein the processor-readable storage medium stores a computer program, and the computer program is configured to cause the processor to execute the steps of the conflict processing method according to any one of claims 1 to 11.

46. A conflict processing apparatus applied to a network device, comprising a memory, a transceiver, and a processor;
wherein the memory is configured to store a computer program; the transceiver is configured to send and receive data under control of the processor; the processor is configured to read the computer program from the memory and perform the following operations:
performing conflict processing on transmission over Orthogonal Frequency Division Multiplexing (OFDM) symbols of Sub-Band Full Duplex (SBFD), the conflict processing comprising at least one of the following:
performing processing of a first conflict first; or
performing processing of a second conflict first;
wherein the first conflict is a conflict between channels or signals in the same transmission direction, and the second conflict is a conflict between uplink channels or signals and downlink channels or signals.

47. The conflict processing apparatus according to claim 46, wherein performing the processing of the first conflict first comprises: performing the processing of the first conflict and then performing the processing of the second conflict;
and/or, performing the processing of the second conflict first comprises: performing the processing of the second conflict and then performing the processing of the first conflict.

48. The conflict processing apparatus according to claim 46 or 47, wherein the processing of the first conflict comprises at least one of the following:
transmitting a first channel among multiple channels in the same transmission direction, and multiplexing information carried on a second channel other than the first channel onto the first channel; wherein the first channel is at least one of the multiple channels; or
transmitting a target channel among multiple channels in the same transmission direction, and multiplexing the information carried on the multiple channels onto the target channel; wherein the target channel is another channel in the same transmission direction; or
discarding a channel or signal determined based on a predefined rule among multiple channels or signals in the same transmission direction; or
transmitting a first-priority channel or signal and discarding a second-priority channel or signal among multiple channels or signals in the same transmission direction; wherein the first priority is higher than the second priority.

49. The conflict processing apparatus according to claim 46 or 47, wherein the processing of the second conflict comprises at least one of the following:
determining to transmit an uplink channel or signal or a downlink channel or signal based on a predefined rule; or
determining to transmit an uplink channel or signal or a downlink channel or signal based on semi-static configuration information; or
determining to transmit an uplink channel or signal or a downlink channel or signal based on dynamic indication information.

50. The conflict processing apparatus according to claim 49, wherein the predefined rule comprises at least one of the following:
transmission of semi-statically configured channels in different transmission directions is not allowed on SBFD OFDM symbols; or
transmission of dynamically scheduled channels in different transmission directions is not allowed on SBFD OFDM symbols; or
when a conflict exists between multiple semi-statically configured channels or signals in different transmission directions on SBFD OFDM symbols, a channel or signal in a predefined transmission direction is transmitted; wherein the predefined transmission direction is uplink or downlink; or
when the transmission direction of a semi-statically configured channel or signal differs from the transmission direction of a dynamically scheduled channel or signal on SBFD OFDM symbols, the dynamically scheduled channel or signal is transmitted.

51. The conflict processing apparatus according to claim 46 or 47, wherein, when a third conflict exists between a transmission direction of a physical channel or signal and a transmission direction of a physical resource, the processor is configured to read the computer program from the memory and execute at least one of the following operations:
after performing the processing of the first conflict, performing the processing of the third conflict; or
before performing the processing of the first conflict, performing the processing of the third conflict; or
after performing the processing of the second conflict, performing the processing of the third conflict; or
before performing the processing of the second conflict, performing the processing of the third conflict.

52. The conflict processing apparatus according to claim 47, wherein after performing the processing of the second conflict and then the processing of the first conflict, the processor is configured to read the computer program from the memory and perform the following operation:
performing the processing of the second conflict again.

53. The conflict processing apparatus according to claim 52, wherein the processor is configured to read the computer program from the memory and perform the following operation:
if a transmission conflict still exists on the SBFD OFDM symbol after performing the processing of the second conflict and then the processing of the first conflict, performing the processing of the second conflict again.

54. The conflict processing apparatus according to claim 52 or 53, wherein, when a third conflict exists between a transmission direction of a physical channel or signal and a transmission direction of a physical resource, the processor is configured to read the computer program from the memory and execute at least one of the following operations:
after performing the processing of the first conflict, performing the processing of the third conflict; or
before performing the processing of the first conflict, performing the processing of the third conflict; or
after performing the processing of the second conflict, performing the processing of the third conflict; or
before performing the processing of the second conflict, performing the processing of the third conflict.

55. The conflict processing apparatus according to claim 51 or 54, wherein the transmission direction of the physical resource is a transmission direction on a physical resource unit determined based on an indication from a network device;
wherein the third conflict comprises that a transmission direction of at least one physical resource unit occupied by the physical channel or signal is different from the transmission direction of the physical channel or signal.

56. The conflict processing apparatus according to claim 51 or 54, wherein the processing of the third conflict comprises:
when the third conflict exists, discarding the physical channel or signal.

57. A network device, comprising:
a processing unit, configured to perform conflict processing on transmission over Orthogonal Frequency Division Multiplexing (OFDM) symbols of Sub-Band Full Duplex (SBFD), the conflict processing comprising at least one of the following:
performing the processing of a first conflict first; or
performing the processing of a second conflict first;
wherein the first conflict is a conflict between channels or signals in the same transmission direction, and the second conflict is a conflict between uplink channels or signals and downlink channels or signals.

58. The network device according to claim 57, wherein performing the processing of the first conflict first comprises: performing the processing of the first conflict and then performing the processing of the second conflict;
and/or, performing the processing of the second conflict first comprises: performing the processing of the second conflict and then performing the processing of the first conflict.

59. The network device according to claim 57 or 58, wherein the processing of the first conflict comprises at least one of the following:
transmitting a first channel among multiple channels in the same transmission direction, and multiplexing information carried on a second channel other than the first channel onto the first channel; wherein the first channel is at least one of the multiple channels; or
transmitting a target channel among multiple channels in the same transmission direction, and multiplexing information carried on the multiple channels onto the target channel; wherein the target channel is another channel in the same transmission direction; or
discarding a channel or signal determined based on a predefined rule from among multiple channels or signals in the same transmission direction; or
transmitting a first-priority channel or signal and discarding a second-priority channel or signal from among multiple channels or signals in the same transmission direction; wherein the first priority is higher than the second priority.

60. The network device according to claim 57 or 58, wherein the processing of the second conflict comprises at least one of the following:
determining to transmit an uplink channel or signal or a downlink channel or signal based on a predefined rule;
determining to transmit an uplink channel or signal or a downlink channel or signal based on semi-static configuration information;
determining to transmit an uplink channel or signal or a downlink channel or signal based on dynamic indication information.

61. The network device according to claim 60, wherein the predefined rule comprises at least one of the following:
transmission of channels with different transmission directions configured semi-statically is not allowed on SBFD OFDM symbols; or
transmission of channels with different transmission directions scheduled dynamically is not allowed on SBFD OFDM symbols; or
when a conflict exists between multiple semi-statically configured channels or signals with different transmission directions on SBFD OFDM symbols, a channel or signal in a predefined transmission direction is transmitted; wherein the predefined transmission direction is uplink or downlink; or
when the transmission direction of a semi-statically configured channel or signal differs from that of a dynamically scheduled channel or signal on SBFD OFDM symbols, the dynamically scheduled channel or signal is transmitted.

62. The network device according to claim 57 or 58, wherein, when a third conflict exists between the transmission direction of a physical channel or signal and the transmission direction of a physical resource, the processing unit is further configured to perform at least one of the following:
after performing the processing of the first conflict, performing the processing of the third conflict; or
before performing the processing of the first conflict, performing the processing of the third conflict; or
after performing the processing of the second conflict, performing the processing of the third conflict; or
before performing the processing of the second conflict, performing the processing of the third conflict.

63. The network device according to claim 58, wherein the processing unit is further configured to:
after performing the processing of the second conflict and then the processing of the first conflict, perform the processing of the second conflict again.

64. The network device according to claim 63, wherein the processing unit is further configured to:
if a transmission conflict still exists on the SBFD OFDM symbol after performing the processing of the second conflict and then the processing of the first conflict, perform the processing of the second conflict again.

65. The network device according to claim 63 or 64, wherein, when a third conflict exists between the transmission direction of a physical channel or signal and the transmission direction of a physical resource, the processing unit is further configured to perform at least one of the following:
after performing the processing of the first conflict, performing the processing of the third conflict; or
before performing the processing of the first conflict, performing the processing of the third conflict; or
after performing the processing of the second conflict, performing the processing of the third conflict; or
before performing the processing of the second conflict, performing the processing of the third conflict.

66. The network device according to claim 62 or 65, wherein the transmission direction of the physical resource is a transmission direction on a physical resource unit determined based on an indication from a network device;
wherein the third conflict comprises that a transmission direction of at least one physical resource unit occupied by the physical channel or signal is different from the transmission direction of the physical channel or signal.

67. The network device according to claim 62 or 65, wherein the processing of the third conflict comprises:
when the third conflict exists, discarding the physical channel or signal.

68. A processor-readable storage medium, wherein the processor-readable storage medium stores a computer program, the computer program being configured to cause the processor to perform the steps of the conflict processing method according to any one of claims 12 to 22.
